# EUROPÄISCHE PATENTSCHRIFT

(11) **EP 0 530 590 B1**
(45) Veröffentlichungstag und Bekanntmachung des Hinweises auf die Patenterteilung: **17.01.1996**
(21) Anmeldenummer: 92114120.6
(22) Anmeldetag: 19.08.1992
(51) Int. Cl.: C08L 21/00, C08K 5/39

(54) **Verfahren zur Herstellung von Dienkautschuk-Vulkanisaten**
Process for preparing diene rubber vulcanisates
Procédé pour préparer des vulcanisats de caoutchouc diénique

(30) Priorität: 30.08.1991 DE 4128869; 04.08.1992 DE 4225684
(43) Veröffentlichungstag der Anmeldung: 10.03.1993
(73) Patentinhaber: HÜLS AKTIENGESELLSCHAFT, D-45764 Marl (DE)
(72) Erfinder: Wolpers, Jürgen, Dr., W-4358 Haltern (DE); Zerpner, Dieter, Dr., W-4370 Marl (DE); Nordsiek, Karl-Heinz, Dr., W-4370 Marl (DE)

(56) Entgegenhaltungen:
- EP-A- 0 432 405

## Beschreibung

Dienkautschuke gehören zu den am häufigsten verwendeten Allzweckkautschuken. Man versteht darunter Polymere und Copolymere aus Butadien, Styrol und auch Isopren. Auch der Naturkautschuk sowie das synthetische Polyisopren sind als Dienkautschuke anzusehen. Diese Kautschuke sind wohlfeil, in großen Mengen verfügbar und weisen gute Allgemeineigenschaften auf. Nachteilig für diese Kautschukgruppe ist eine strukturbedingte, nur begrenzte bis ungenügende aerobe und anaerobe Alterungsbeständigkeit und Wärmestabilität ihrer Schwefelvulkanisate.

Unter anaerober Alterung versteht man das Verhalten des Vulkanisates unter Luftausschluß, auch z. B. in der Heizform, wo längere Reaktionszeiten bei vielen Dienkautschuken zur sogenannten Reversion führt. Hierunter versteht man den Abfall wichtiger Materialeigenschaften wie Zugfestigkeit, Reißdehnung, Modul und dynamischer Eigenschaften, wenn die Mischung länger als bis zum Optimum geheizt wird. Das Phänomen der Reversion läßt sich am einfachsten anhand einer sogenannten Vulkameterkurve nach DIN 53 529 beobachten.

Die aerobe Alterung andererseits umfaßt alle Vorgänge der natürlichen Alterung in Gegenwart von Luftsauerstoff, auch bei erhöhten Temperaturen, wie z. B. Fahrzeugreifen unter Betriebsbedingungen.

Die geschilderten Mängel in der aeroben und anaeroben Alterung sind bei Naturkautschuk und Polyisopren besonders ausgeprägt.

Um diesen Nachteil zumindest teilweise auszugleichen, hat man neben dem Einsatz von Antioxidanzien eine Reihe alternativer Vulkanisationsrezepturen angewandt. Hierzu gehören sogenannte Schwefelspender wie Tetramethylthiuramdisulfid (TMTD), Dimorpholindisulfid (DTDM) und ähnliche Verbindungen oder sogenannte EV-Systeme, die den eingesetzten Schwefel rationeller verwenden, indem man eine größere Menge Beschleuniger bei niedrigerer Schwefeldosierung einsetzt. Bei diesen Vulkanisationssystemen ist jedoch wegen der geringeren Anvulkanisationszeit die Verarbeitungssicherheit häufig beeinträchtigt. Auch die mit EV-Systemen hergestellten Vulkanisate weisen verschiedene Nachteile auf, wozu besonders deren erhöhte Ermüdungsanfälligkeit bei dynamischer Dauerbelastung gehört. Außerdem besteht bei Einsatz von TMTD und generell bei niedermolekularen Dithiocarbamaten die Gefahr der Bildung von krebserregenden Nitrosaminen in erheblicher Menge. Vor allem aber sind die erzielbaren Verbesserungen der Alterungsstabiliät noch nicht überzeugend, sondern lassen überwiegend noch zu wünschen übrig.

Ein anderer Weg zur Verbesserung der thermischen Stabilität von Dienkautschuk-Vulkanisaten wurde in EP-A-0 385 072 und EP-A-0 432 417 vorgeschlagen: Hier werden als alleinige Vernetzungsmittel Verbindungen mit die übliche Schwefelvulkanisation beschleunigenden Resten der allgemeinen Struktur 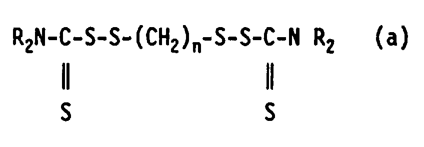
- mit R = Ethyl und n = 2 (EP-OS 0 385 072),
   hiernach BDTE genannt, und
- mit R = Benzyl, n = 2 (EP-OS 0 432 417),
   hiernach BDBzTE genannt,
- sowie mit n = 6, hiernach BDBzTH genannt (EP-A-0 432 417), eingesetzt.

Die Beispiele belegen, daß z. B. mit 4,5 Teilen BDTE oder 7 Teilen BDBzTE auf 100 Teile Kautschuk Vulkanisate von sehr guter Alterungsstabilität zu erhalten sind. Auch BDBzTH mit einer längeren Netzbrücke wird als Vergleichsbeispiel herangezogen (EP-A-0 432 417, Tabelle 1 a, Beispiele 1 a bzw. Da). Nicht verschwiegen werden jedoch auch die Nachteile des Systems:
a) BDTE ist anfällig für die Bildung gefährlicher Nitrosamine.
b) Mit den Vernetzern BDBzTE und BDBzTH läuft die Vulkanisationsreaktion wesentlich langsamer ab (t₉₀-Werte von 29 min. bzw. 34,3 min., so daß bei 150 °C unwirtschaftlich lange Vulkanisationszeiten von 40 min. und länger benötigt werden.
c) Aufgrund des hohen Molekulargewichtes von BDBzTE und BDBzTH müssen, um brauchbare Vulkanisateigenschaften zu erzielen, mindestens 7 Teile pro 100 Teile Kautschuk eingesetzt werden, was eine wirtschaftliche Belastung der Verfahren nach EP-A-0 385 072 und EP-A-0 432 472 darstellt.

Ferner besteht bei Einsatz so großer Mengen an Chemikalien die Gefahr, daß die entstehenden Folgeprodukte im Zuge der Vulkanisation im Elastomeren nicht mehr ausreichend löslich sind, sondern zu unerwünschten Ausblüherscheinungen führen.

In beiden genannten Patentschriften wird ausdrücklich auf die negative Auswirkung generell von Schwefelzusätzen hinsichtlich der Stabilität des Vulkanisates gegen Reversion aufmerksam gemacht.

Die vorgenannten Europäischen Patentanmeldungen liefern somit keinerlei Anhaltspunkt, wie man Dienkautschuk-Vulkanisate hervorragender Alterungsstabilität mit wirtschaftlich und technisch vertretbaren Mengen an Vernetzersubstanzen bei akzeptablen Vulkanisationszeiten erhalten kann.

Die beiden DE-C-22 65 382 und DE-C-22 56 511 befassen sich sehr allgemein mit den Verbindungen der allgemeinen Formel

A-S-S-R-S-S-A' (b)

wobei die Reste A und A'eine große Anzahl von Beschleunigerresten, u.a. auch N-substitutierte Thiocarbamoyl-Reste, und R einen fast beliebigen zweiwertigen organischen Rest darstellen. Daraus ergibt sich eine äußerst große Auswahl von Substanzen, von denen einige in den Beispielen eingesetzt werden. Darunter befindet sich auch eine analoge Substanz gemäß der allgemeinen Formel (a) mit R = Methyl und n = 2, hiernach BDMTE genannt. Diese wird in der DE-PS 22 65 382 auch zusammen mit Schwefel eingesetzt (Spalte 31/32, Tabelle VII), jedoch zeigen die Versuche, daß bereits geringe Mengen Schwefel (0,3 bis 1 %) zu unerwünschten Reversionserscheinungen führen. Ausdrücklich wird eingeräumt, daß Ansätze ohne Schwefelzusatz eine größere Reversionswiderstandsfähigkeit aufweisen (Spalte 32, Zeile 1 bis 11).

In der DE-C-22 56 511 werden BDMTE und BDTE als Vernetzersubstanzen eingesetzt. Hier wird auf die ungünstige Vernetzungsdichte der Vulkanisate als Nachteil hingewiesen (Spalte 21, Zeilen 12 bis 27), die durch Zusätze von 0,5 - 1,5 Teilen Schwefel ausgeglichen werden können, womit man sich jedoch wieder eine erhöhte Reversionsanfälligkeit der Kautschukmischungen einhandelt.

Generell ist gegenüber dem zuletzt genannten Stand der Technik zu bemängeln, daß das Ausbleiben von Reversionserscheinungen in der Rheometerprüfung als einziges Kriterium für die thermische Stabilität verwendet wird. Wie eingangs von uns jedoch dargestellt, sagt die Rheometerprüfung allenfalls etwas über die anaerobe Alterung aus - und auch dies nur unvollständig, da die Rheometerkurve lediglich eine Aussage über das Drehmoment des Vulkanisates liefert. Keine Angaben werden in den DE-C-22 65 382 und DE-C-22 56 511 über die aerobe Alterungsbeständigkeit gemacht, die viel relevantere Anhaltspunkte zur Beständigkeit des Vulkanisates im praktischen Einsatz liefert. Diese Aussagen gewinnt man vorzugsweise durch Lagerung von Vulkanisatproben in einem Umluftschrank und bei einer dauernden Temperaturbelastung von 100 °C über einen Zeitraum von 3, 7 oder 14 Tagen (gemäß DIN 53 508). Nach Ablauf dieser Zeit, die für Naturkautschuk, cis-Polyisopren, cis-Polybutadien und deren Verschnitten eine außerordentlich harte Belastung darstellt, werden alle relevanten Elastomereigenschaften wie Zugfestigkeit, Reißdehnung, Spannungswert, Härte, Rückprallelastizität, gegebenenfalls auch die dynamischen Eigenschaften und der Abriebwiderstand gemessen. Somit gewinnt man einen umfassenden Einblick in die thermische Alterungsbeständigkeit des Elastomeren.

Es bleibt daher festzuhalten, daß der bekannte Stand der Technik kein brauchbares Verfahren liefert, um unter angemessenen Bedingungen zu thermo- und alterungsstabilen Vulkanisaten von Dienkautschuken unter praktischen Einsatzbedingungen zu gelangen.

Die Aufgabe der vorliegenden Erfindung besteht somit darin, ein thermisch widerstandfähiges d. h. sowohl ein reversionsbeständiges als auch insbesondere alterungsstabiles Vernetzungssystem für Naturkautschuk und synthetische Dienkautschuke zu finden, das die Nachteile der bekannten Systeme vermeidet. Das bedeutet im einzelnen:
1. Vulkanisationsgeschwindigkeit wie bei herkömmlichen Schwefel/Beschleuniger-Systemen.
2. Vernetzungsausbeute, gemessen an Vulkanisateigenschaften wie Zugfestigkeit, Spannungswert und Druckverformungsrest, wie bei konventionellen Schwefel/Beschleunigersystemen.
3. Reversionsbeständigkeit, d. h. anaerobe Alterungsbeständigkeit.
4. Hervorragende aerobe Alterungsbeständigkeit der Vulkanisate.
5. Reduzierung der Einsatzmenge an Vernetzer aus technischen Gründen (Ausblühgefahr) wie auch aus wirtschaftlichen Gründen.

Eine Lösung des Problems unter Erfüllung aller Vorgaben wurde nun in überraschender Weise dadurch erreicht, daß man, bezogen auf 100 Teile Dienkautschuk, 1 bis 4,5 Teile Vernetzer mit der Formel 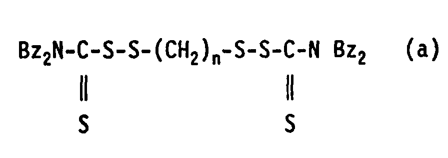 mit Bz = Benzyl, n = 2 (BDBzTE) oder
n = 6 (BDBzTH),
unter gleichzeitiger Verwendung von 0,05 bis 0,3 Teilen Schwefel sowie zusätzlich 1 bis 2,5 Teilen Merkapto- oder 0,2 bis 0,8 Teilen Sulfenamidbeschleuniger oder Mischungen von 0,3 bis 2,5 Teilen Merkaptobeschleuniger und 0,1 bis 0,8 Teilen Sulfenamidbeschleuniger als Vulkanisationssystem bei Temperaturen von 140 bis 200°C einsetzt. Der Beschleuniger dient dabei zur Feinabstimmung bei der Steuerung der Vulkanisationskinetik.

Unter den nun gefundenen Voraussetzungen kann man bei der Vulkanisation von Dienkautschuken wie z. B. Naturkautschuk (NR), cis-Polyisopren (cis-IR), cis-Polybutadien (cis-BR), Styrol-Butadien-Kautschuk (SBR) oder deren Verschnitten die Einsatzmenge der Vernetzer BDBzTE oder BDBzTH auf 1 bis 4,5 Teile, vorzugsweise 2 bis 4 Teile, pro 100 Teile Kautschuk reduzieren, wenn man gleichzeitig 0,05 bis 0,3 Teile, vorzugsweise 0,1 bis 0,2 Teile, Schwefel und 1 bis 2,5 Teile, vorzugsweise 1,3 bis 1,8 Teile, Merkaptobeschleuniger oder 0,2 bis 0,8 Teile, vorzugsweise 0,3 bis 0,5 Teile, Sulfenamidbeschleuniger einsetzt, ohne daß bei den mechanischen Eigenschaften nach Alterung die geringsten Abstriche gegenüber Vulkanisaten aus der langsamen Vernetzung mit 6 bis 7 Teilen dieser Vernetzer allein gemacht werden müssen.

Bevorzugt sind jedoch Mischungen mit 0,3 bis 2,5 Teile, besonders bevorzugt 0,6 bis 1,5 Teile, Merkapto- und 0,1 bis 0,8 Teile, besonders bevorzugt 0,2 bis 0,6 Teile, Sulfenamidbeschleuniger, neben den oben angegebenen Mengen an Vernetzer und Schwefel.

Als bevorzugte Beschleuniger finden Zink-2-merkaptobenzthiazol (ZMBT), Dibenzothiazyldisulfid (MBTS) und N-tert-butyl-2-benzothiazylsulfenamid (TBBS) Verwendung, andere Merkapto- oder Sulfenamidbeschleuniger sind jedoch durchaus im Rahmen der Erfindung anwendbar.

Die gefundenen Werte zeigen, daß gegenüber der ausschließlichen Verwendung der Vernetzer sogar noch deutliche Verbesserungen zu erzielen sind. Dieses Ergebnis war im Hinblick auf den bekannt ungünstigen Einfluß von Schwefel auf das Reversions- und Alterungsverhalten von Elastomeren keineswegs zu erwarten.

Als Dienkautschuke eignen sich Naturkautschuk, cis-Polyisopren, cis-Polybutadien sowie auch herkömmlicher SBR, der sowohl nach Lösungs- als auch nach Emulsionsverfahren hergestellt sein kann. Dazu kommen in gleicher Weise Vinyl-Polybutadien und Vinyl-SBR in Frage. Auch die Anwendung von Nitrilkautschuk und Polyoctenamere (TOR) ist möglich. Gleich gute Ergebnisse werden auch mit Verschnitten dieser Polymeren untereinander erhalten. Außerdem können die Kautschuke ölfrei oder ölverstreckt zum Einsatz kommen.

Die aufgeführten Kautschuktypen werden in Compounds üblicher Zusammensetzung vulkanisiert, d. h. in Mischungen, die Füllstoffe wie Ruße oder Siliziumdioxid, Öle, Kautschukhilfsmittel, Zinkoxid, Stearinsäure, Antioxidantien und gegebenenfalls Ozonschutzmittel in den üblichen Mengen enthalten. Der Einsatz der genannten Antioxidantien (ASM) ist für die Wirkung der erfindungsgemäßen Systeme jedoch nicht erforderlich. Das erfindungsgemäße System liefert auch ohne ASM wesentlich alterungsstabile Vulkanisate als ASM bei einem herkömmlichen System. Die Herstellung der Kautschukmischungen erfolgt in üblicher Weise in Innenmischern (Knetern), gegebenenfalls auch auf Walzwerken.

Die Herstellung der Vernetzersubstanzen ist in den EP-A-0 385 072 und EP-A-0 432 417 im einzelnen beschrieben, so daß an dieser Stelle hierauf verzichtet werden kann.

Die Vulkanisation der fertigen Mischungen kann bei den üblichen Temperaturen, d. h. bei 140 - 200 °C erfolgen. Der Vorteil des erfindungsgemäßen Systems liegt darin, daß man bei höheren Temperaturen vulkanisieren kann, ohne daß sich Reversionserscheinungen mit den bekannten negativen Auswirkungen auf die Vulkanisateigenschaften bemerkbar machen. Man erhält Gummiartikel von hervorragender Alterungsbeständigkeit, die für die verschiedenen Einsatzgebiete von großer Bedeutung sind, wie z. B. für Fahrzeugreifen, technische Elastomer-Artikel wie Motorlager und viele andere Anwendungen bei erhöhten Temperaturen.

Neben den o. g. besonders bevorzugten Beschleunigern kommen auch prinzipiell Beschleuniger auf Triazinbasis in Frage.

Die Vorteile der erfindungsgemäßen Vernetzungssysteme werden anhand der nachfolgenden Beispiele ersichtlich. Die in den Tabellen aufgeführten Eigenschaften werden nach den Prüfvorschriften der einschlägigen DIN-Normen ermittelt.

Die Zugfestigkeit und Reißdehnung wurden gemäß DIN 53 504 bestimmt. Der Spannungswert, auch Modul genannt, bei 100 bzw. 300 % Dehnung wurde gemäß DIN 53 504 bestimmt.

Die Strukturfestigkeit wurde nach Pohle (vgl. S. Boström, Kautschuk-Handbuch, Band 5, Seite 123) bestimmt.

Die bleibende Dehnung (Zugverformungsrest) wurde gemäß DIN 53 518 bestimmt.

Die Härte (Shore A) wurde gemäß DIN 53 505 bestimmt.

Die Rückprallelastizität (Elastizität) wurde gemäß DIN 53 512 bestimmt Der Abrieb wurde gemäß DIN 53 516 bestimmt.

Der Druckverformungsrest (Compression set) wurde gemäß DIN 53 517 bestimmt.

Die Vulkametrie wurde gemäß DIN 53 529 vorgenommen.

Die Kugelzermürbung erfolgte nach der Methode aus S. Boström, Kautschuk-Handbuch, 5. Band, Berliner Union, Stuttgart, 1962, S. 149 - 150.

Die in den Tabellen 2 und 4 aufgeführten erfindungsgemäßen Beispiele 1 - 23 belegen den Fortschritt in der Alterungsstabilität von Dienkautschuk-Vulkanisaten gegenüber dem Stand der Technik sowie auch gegenüber nicht erfindungsgemäßen Zusammensetzungen der Vergleichsbeispiele I bis XI der Tabellen 3 und 4.

Die Beispiele 1 und 2 stellen eine bevorzugte Vulkanisationsrezeptur mit den Grundmischungen A (Naturkautschuk) und B (cis-Polyisopren) dar. Die Werte nach 14 Tagen Alterung zeigen, daß die Restdehnungswerte (Reißdehnung der Vulkanisate nach 14 Tagen Alterung gegenüber dem Wert des ungealterten Vulkanisates noch 73 bzw. 78 % betragen. Dem gegenüber weist das Vergleichsbeispiel V (7 Teile BDBzTE gemäß EP-0 432 417) nur 62 % Restdehnung auf. Vor allem aber äußert sich die träge Vulkanisation (t₉₀-Wert 26,9 min) des Vergleichsbeispiels in einem völlig unakzeptablen Wert für den Druckverformungsrest (Compression set) sowohl bei 70 als auch bei 100 °C.

Selbst eine Erhöhung der Vulkanisationstemperatur auf 180 °C führte zu keiner Verbesserung: Der t₉₀-Wert betrug immer noch 9,6 Minuten, so daß die bei dieser Temperatur üblichen 10 Minuten Vulkanisationszeit auch nicht ausreichen würden. Die wirtschaftlichen Nachteile sowie die Ausblühungsgefahr bei solch hohen Dosierungen an Vernetzersubstanz im Vergleichsbeispiel V wurde bereits abgehandelt.

In Vergleichsbeispiel IV wird eine Naturkautschukmischung mit einem herkömmlichen Thiuramsystem vulkanisiert. Nach 14 Tagen Alterung im Umluftschrank bei 100 °C treten die Nachteile der Thiuramvulkanisation gegenüber dem erfindungsgemäßen System deutlich zu Tage: Nicht nur ist die Restdehnung auf 57 % des Ausgangswertes abgefallen; sondern auch die Strukturfestigkeit nach Pohle (Weiterreißfestigkeit) ist gegenüber den erfindungsgemäßen Beispielen stark abgefallen. Eine Schädigung des Vulkanisates geht auch aus der deutlich abfallenden Rückprallelastizität bei 75 °C hervor.

Ähnliche Nachteile weist ein EV-System auf (Vergleichsbeispiel II). Auch hier belegen der bereits nach 7 Tagen stark zurückgegangene Wert der Weiterreißfestigkeit sowie die nach 14 Tagen stark gesunkene Rückprallelastizität bei 75 °C sehr deutlich eine starke Schädigung des Vulkanisates und damit eine nicht ausreichende Alterungsstabilität im Vergleich zu den erfindungsgemäßen Systemen.

Ein herkömmliches Schwefel-Beschleuniger-System mit 0,6 Teile Sulfenamidbeschleuniger und 2,5 Teilen Schwefel in einer Naturkautschukmischung wurde nur der Vollständigkeit halber in die Tabelle als Vergleichsbeispiel I aufgenommen: Die Werte nach Alterung fallen derart kraß ab, daß an einen praktischen Einsatz unter thermischer Belastung überhaupt nicht zu denken ist.

Aber auch der Einsatz von BDBzTE mit einem Sulfenamidbeschleuniger allein führt nicht zum Ziel, wie das Vergleichsbeispiel III zeigt. Zunächst einmal ist die Vulkanisation noch langsamer als mit 7 Teilen BDBzTE allein, was sich in einem unakzeptablen Compression set-Wert äußert. Nach 14 Tagen Alterung zeigt sich jedoch durch die zurückgehenden Werte für Härte und Rückprallelastizität sowie den ansteigenden Compression set gegenüber den Werten nach 7 Tagen Alterung, daß auch hier ein deutlicher Abbau des Vulkanisates fortschreitet.

Vergleichsbeispiel VII zeigt den Effekt einer zu hohen Dosierung eines Beschleunigers, der am Beispiel einer Grundmischung auf Basis eines cis-Polyisoprens mit dem Beschleuniger Zink-2-merkaptobenzothiazol (ZMBT) gezeigt wird. Nach 14tägiger Alterung bei 100 °C im Heißluftschrank zeigen die stark abgefallenen Werte für Zugfestigkeit und Weiterreißfestigkeit (Struktur nach Pohle), daß das Vulkanisat dieses Vergleichsbeispiels deutlich weniger alterungsbeständig ist als das erfindungsgemäße Beispiel 3, das eine deutlich bessere Retention der physikalischen Werte wie Zugfestigkeit, Reißdehnung und Compression set aufweist.

Neben den bevorzugten Ausführungsformen der Erfindung entsprechend den erläuterten Beispielen 1 und 2 führen auch abgeänderte Rezepturen im Rahmen der erfindungsgemäßen Vorgabe zu Ergebnissen, die dem Stand der Technik deutlich überlegen sind.

In Beispiel 3 ist die Vulkanisation von cis-Polyisopren mit 3 Teile des BDBzTE sowie mit 0,3 Teile Schwefel und 0,5 Teile des Zink-2-merkaptobenzothiazol (ZMBT) beschrieben. Auf die verbesserte Alterungsstabilität gegenüber dem Vergleichsbeispiel VII wurde bereits weiter oben hingewiesen.

In den Beispielen 4 und 5 wird als Vernetzer BDBzTH eingesetzt. Die Beispiele zeigen, daß mit diesem Vernetzer die gleiche hervorragende Alterungsstabiltät zu erreichen ist wie mit dem Vernetzer BDBzTE. Bei Ausdehnung der Heißluftalterung von 7 auf 14 Tage fällt die Weiterreißfestigkeit (Struktur nach Pohle) nicht nennenswert ab, während die im gleichen Zeitraum noch zunehmende Rückprallelastizität bei 75 °C keinerlei Schädigung des Elastomernetzwerks erkennen läßt. Dieses Ergebnis ist bei cis-Polyisopren weder mit Schwefelspendern noch mit EV-Systemen zu erreichen.

Die Beispiele 6 bis 8 zeigen die Verwendung von BDBzTE mit geringeren Mengen Schwefel und 0,4 bis 0,6 Teile des Sulfenamidbeschleunigers TBBS. Die Vulkanisation wird hierdurch etwas langsamer, jedoch sind die Druckverformungsrestwerte sowohl vor als auch nach Alterung der Vulkanisate deutlich besser als bei Verwendung des Vernetzers allein, oder nur mit Zusatzbeschleuniger (Vergleichsbeispiele III und V). Die Werte der Reißdehnung nach 14tägiger Alterung bei 100 °C in Relation zu den Ausgangswerten vor der Alterung, liegen besonders in den Beispielen 6 und 7 mit 80 bzw. 74 % außergewöhnlich hoch. Diese Beispiele zeigen, daß eine Erhöhung der Dosierung von BDBzTE nicht unbedingt in allen Kriterien die besseren Werte ergibt.

Die Beispiele 9 und 10 zeigen die Vulkanisation von Styrol-Butadien-Kautschuk (SBR) durch 3 bis 4 Teile des Vernetzers BDBzTE und Zusatz von 0,1 bis 0,2 Teile Schwefel und 0,4 Teil des Zusatzbeschleunigers TBBS. Bei beiden Vulkanisaten werden hervorragende Abrieb- und Druckverformungswerte nach 14tägiger Alterung erzielt, in der Rezeptur gemäß Beispiel 10, außerdem eine geringere Verhärtung und eine höhere Restdehnung.

Diese beiden Beispiele zeigen, daß bei SBR, der bekanntermaßen zu Verhärtung bei der aeroben Alterung neigt, eine niedrigere Dosierung von Schwefel sowie eine zur Obergrenze tendierende Menge Vernetzer BDBzTE oder BDBzTH günstigere Ergebnisse liefern, wenn man einen möglichst geringen Modulanstieg anstrebt.

Die Vergleichsbeispiele VIII bis X veranschaulichen die Auswirkungen einer gegenüber den Beispielen 9 und 10 (0,2 bzw. 0,1 Teile Schwefel) auf 0,3 bis 0,6 Teile angehobenen Schwefeldosierung in einer SBR-Mischung, und zwar sowohl mit dem Zusatzbeschleuniger TBBS (X : 0,2 Teil) als auch ohne diesen (VIII und IX). Nach 14 Tagen bei 100 °C fallen die Restdehnungen der Mischungen ohne Zusatzbeschleuniger auf nur 18 bis 27 % des Ausgangswertes. Auch in Vergleichsbeispiel VIII liegen die Restwerte für Zugfestigkeit und Reißdehnung nach 14tägiger Alterung im Umluftschrank bei 100 °C auf einem deutlich niedrigerem Niveau als bei den erfindungsgemäßen Beispielen 9 und 10, so daß die Wirksamkeit des erfindungsgemäßen Verfahrens klar zu Tage tritt.

Im Vergleichsbeispiel VI ist die Auswirkung einer zu hohen Schwefeldosierung auf eine Polyisoprenmischung demonstriert (die Menge des Zusatzbeschleunigers TBBS wurde von 0,4 auf 0,2 Teile zurückgenommen, um vergleichbare Spannungswerte der Vulkanisate zu erzielen). Vergleicht man mit dem erfindungsgemäßen Beispiel 2 mit 0,2 Teile Schwefel, so fällt auf, daß bereits nach 7tägiger Alterung bei 100 °C die Dehnung auf < 300 % (64 % des Ausgangswertes gegenüber 77 % in Beispiel 2) gefallen ist. Auch die Weiterreißfestigkeit ist bei höherer Schwefeldosierung von vorn herein niedriger.

Während in Beispiel 2 das Eigenschaftsniveau nach 14 Tagen bei 100 °C gegenüber 7 Tagen kaum noch weiter abgefallen ist, erkennt man bei Vergleichsbeispiel VI einen deutlichen weiteren Abfall von Zugfestigkeit, Dehnung und Elastizität, was auf eine Schädigung des Netzwerkes deutet. Das erfindungsgemäße System wirkt sich somit in gleicher Weise auf cis-Polyisopren wie auch auf SBR aus.

In Beispiel 11 wird die Vulkanisation eines Verschnittes aus Naturkautschuk, cis-Polybutadien und SBR, wie er in einer Laufflächenmischung für Winterreifen Verwendung findet, mit dem erfindungsgemäßen Vernetzungssystem gezeigt. Auch hier ist eine ausgezeichnete Retention des Druckverformungsrestes sowie der Rückprallelastizität zu beobachten.

In einer weiteren bevorzugten Ausführungsform wird sehr vorteilhaft Dibenzothiazyldisulfid (MBTS) entweder in Kombination mit TBBS oder aber allein eingesetzt. Hierbei gelingt es, die Vulkanisationszeiten noch weiter zu verkürzen. So weist eine Polyisoprenmischung nach den Beispielen 14 und 15 einen t₉₀-Wert von nur 14 - 15 Minuten auf. Zugleich kann die Dosierung von BDBzTH von 3,3 auf 2,5 Teile gesenkt werden, ohne daß der Spannungswert des Vulkanisates abfällt. Betrachtet man die Alterungseigenschaften, so wird deutlich, daß trotz reduzierter BDBzTH-Menge ähnlich hervorragende Werte an Strukturfestigkeit, Härte und Elastizität erzielt werden, wie in den Beispielen 2 und 4.

Man darf jedoch die Menge dieses Zusatzbeschleunigers allein nicht zu niedrig halten. Bei nur 0,8 Teilen MBTS (Vergleichsbeispiel XI) erhält man ein unzureichendes Vulkanisat und ungünstige Alterungswerte nach 14 Tagen bei 100 °C, die sich besonders in niedriger Strukturfestigkeit und Rückprallelastizität sowie höherer Erwärmung im Kugelzermürbungstest niederschlagen.

Die Beispiele 17 - 19 demonstrieren die Vorteile des erfindungsgemäßen Verfahrens bei der Verwendung von MBTS als Zusatzbeschleuniger von SBR. Nach 14tägiger Alterung bei 100 °C liegt die Zugfestigkeit des Vulkanisates noch bei 20 MPa und die Reißdehnung der gleichen Proben immer noch bei 380 - 500 %, während in den Vergleichsbeispielen VIII - X nur mehr 6 - 11, 8 MPa Zugfestigkeit und 69 - 196 % Reißdehnung erreicht werden.

Das erfindungsgemäße Verfahren eignet sich ebenfalls besonders zur Vulkanisation von ölverstreckten Kautschuken. Dies wird durch die Beispiele 20 bis 23 belegt. Wie aus der Tabelle 4 zu entnehmen ist, werden mit einer Kombination von TBBS und MBTS als Zusatzbeschleuniger (Beispiel 20) oder auch mit MBTS allein (Beispiele 21 bis 22) gute Vulkanisationszustände erreicht. Der Tabelle sind ebenfalls die ausgezeichnete Restwerte für Zugfestigkeit, Reißdehnung, Strukturfestigkeit (nach Pohle) und Compression Set, sowie für die dynamischen Werte bei gleichzeitig nur mäßig ansteigender Härte, nach 14 Tagen Alterung bei 100 °C, zu entnehmen.

Demgegenüber wird in den Vergleichsbeispielen VIII-X nur 6 - 11, 8 MPa Zugefestigkeit und 69 - 196 % Reißdehnung erreicht.

Die aufgeführten Beispiele 1 bis 23 demonstrieren im Vergleich zu den nicht erfindungsgemäßen Vergleichsbeispiele I bis XI die Vorteile des erfindungsgemäßen Verfahrens:

Einsatz von nur 2 bis 4 Teilen der erfindungsgemäßen Vernetzersubstanzen BDBzTE oder BDBzTH pro 100 Teile Kautschuk unter gleichzeitiger Verwendung von 0,05 bis 0,3, vorzugsweise jedoch 0,1 bis 0,2, Teilen Schwefel und 0,3 bis 2,5, besonders jedoch 0,5 bis 1,8 Teilen Merkaptobeschleuniger, wie Zink-2-merkaptobenzothiazol (ZMBT), 2-Merkaptobenzothiazol (MBT) Dibenzothiazyldisulfid (MBTS), oder 0,1 bis 0,8, vorzugsweise 0,3 bis 0,5, Teile Sulfenamidbeschleuniger wie N-tert-Butyl-2-benzothiazylsulfenamid (TBBS), unter diesen jedoch vorzugsweise TBBS oder ZMBT; des weiteren insbesondere Mischungen von 0,7 bis 1,8 Teilen Merkapto- und 0,2 bis 0,6 Teilen Sulfenamidbeschleuniger, wobei hier bevorzugt MBTS und TBBS Verwendung finden.

Man erhält bei Einsatz wirtschaftlicher Mengen und unter Vermeidung von Ausblüherscheinungen im Vulkanisat nach relativ kurzen Vulkanisationszeiten Elastomere von bisher nicht erreichter hervorragender Alterungsbeständigkeit und Reversionsbeständigkeit.

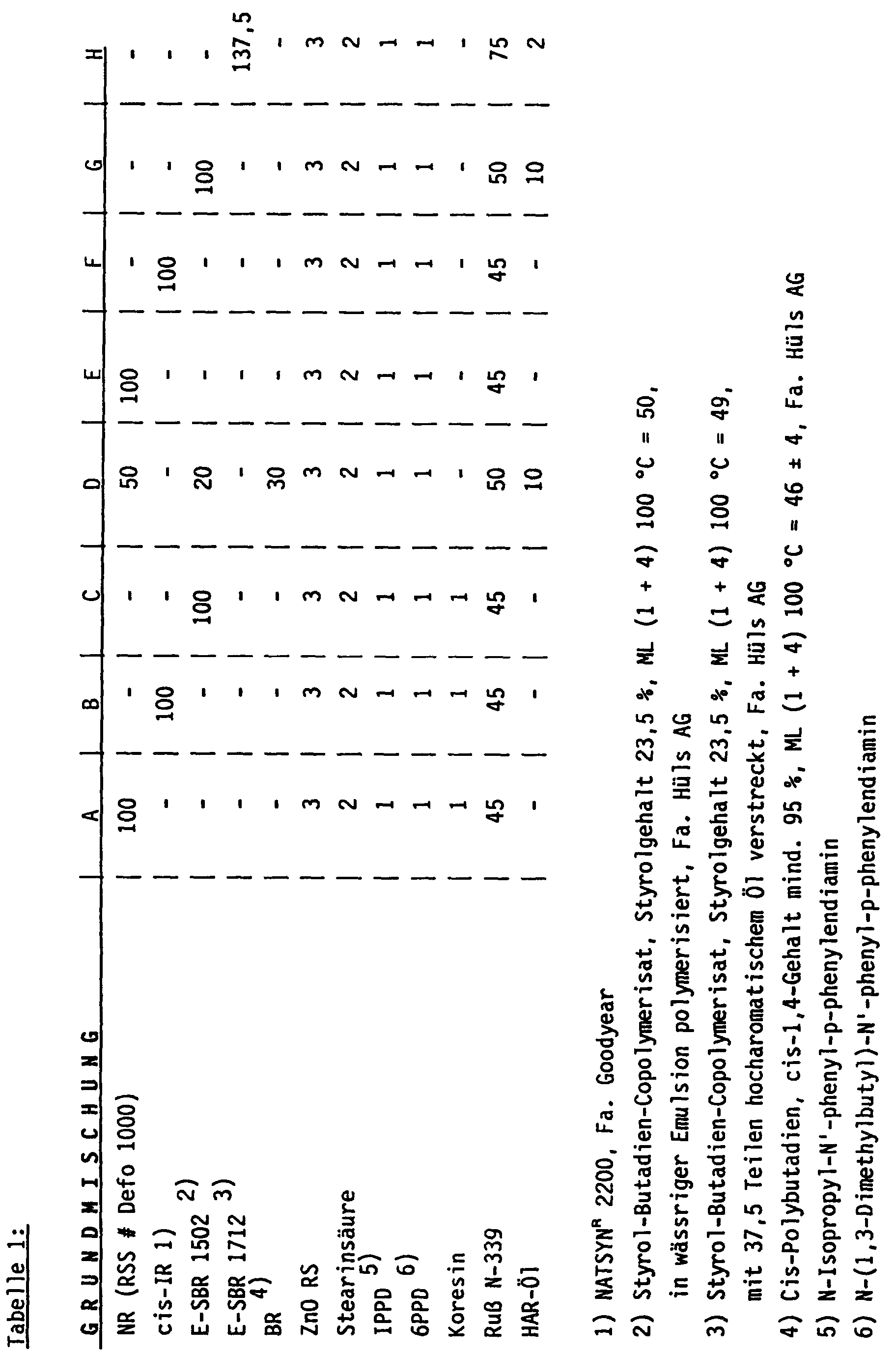

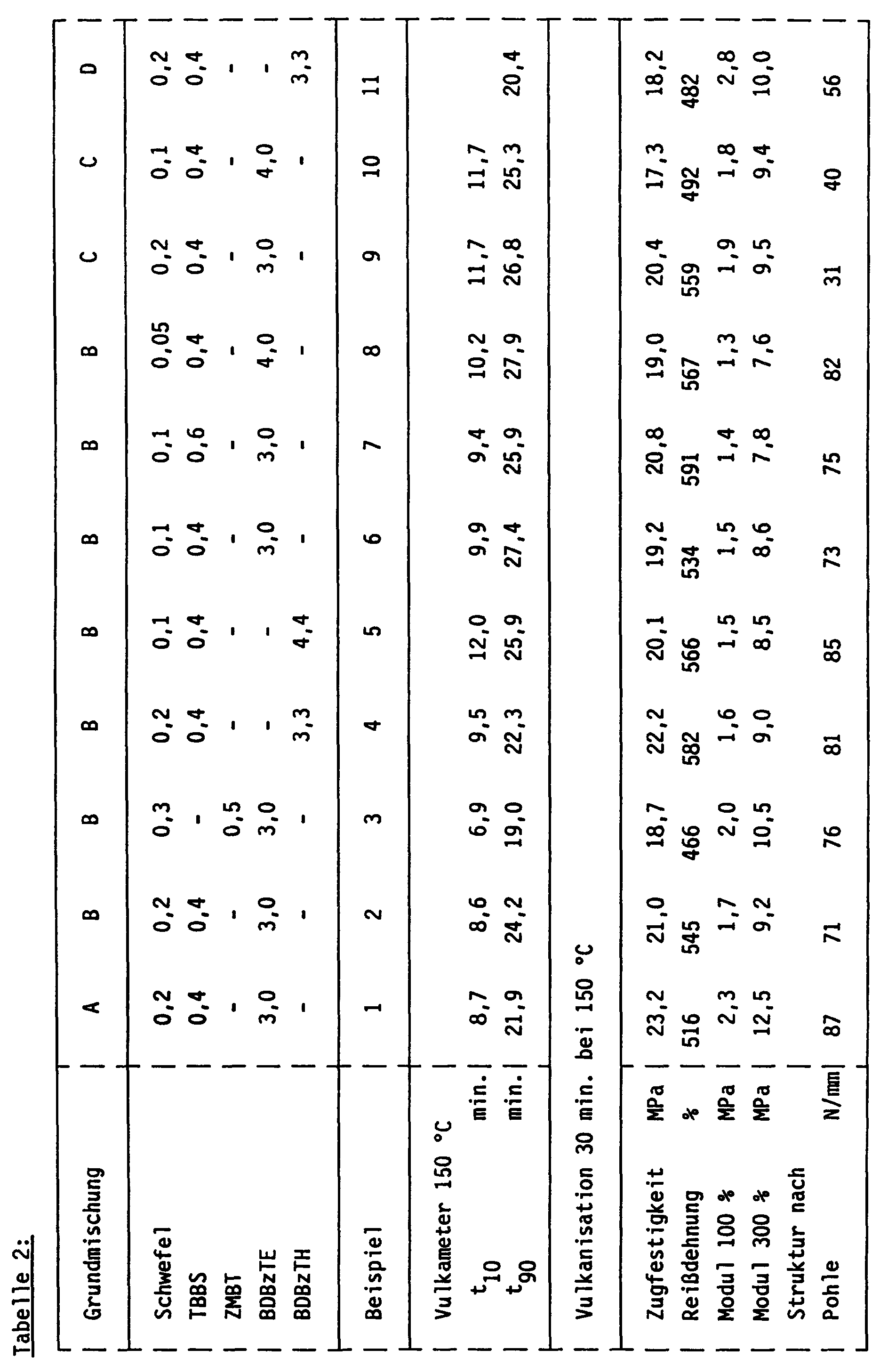

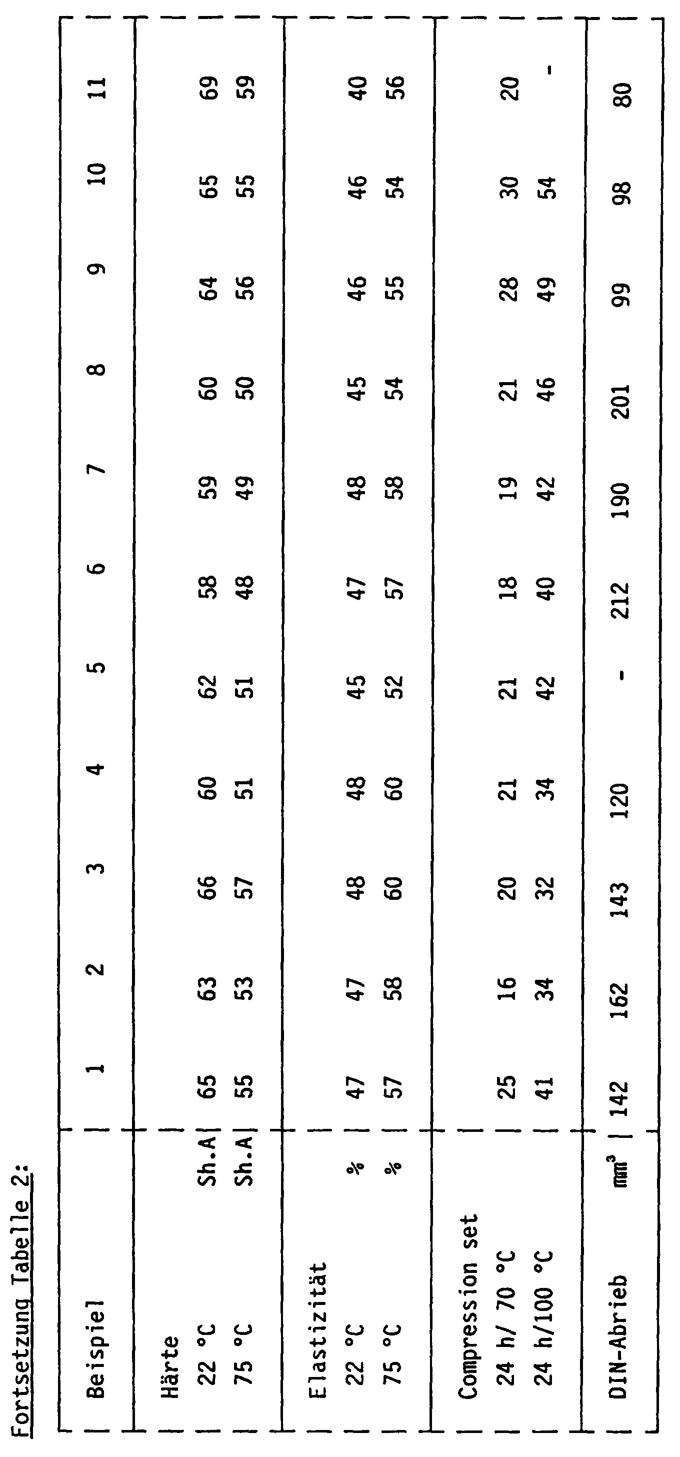

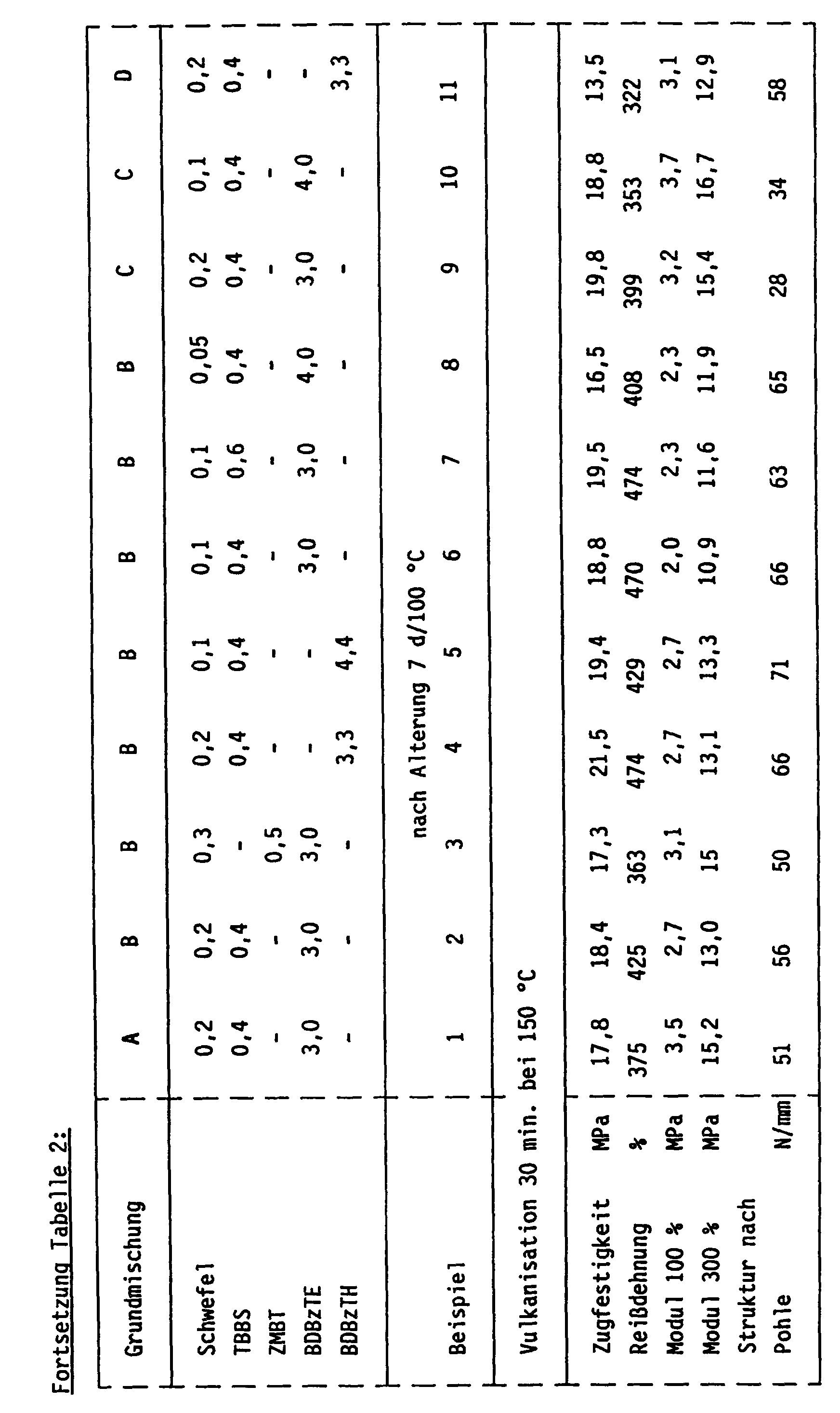

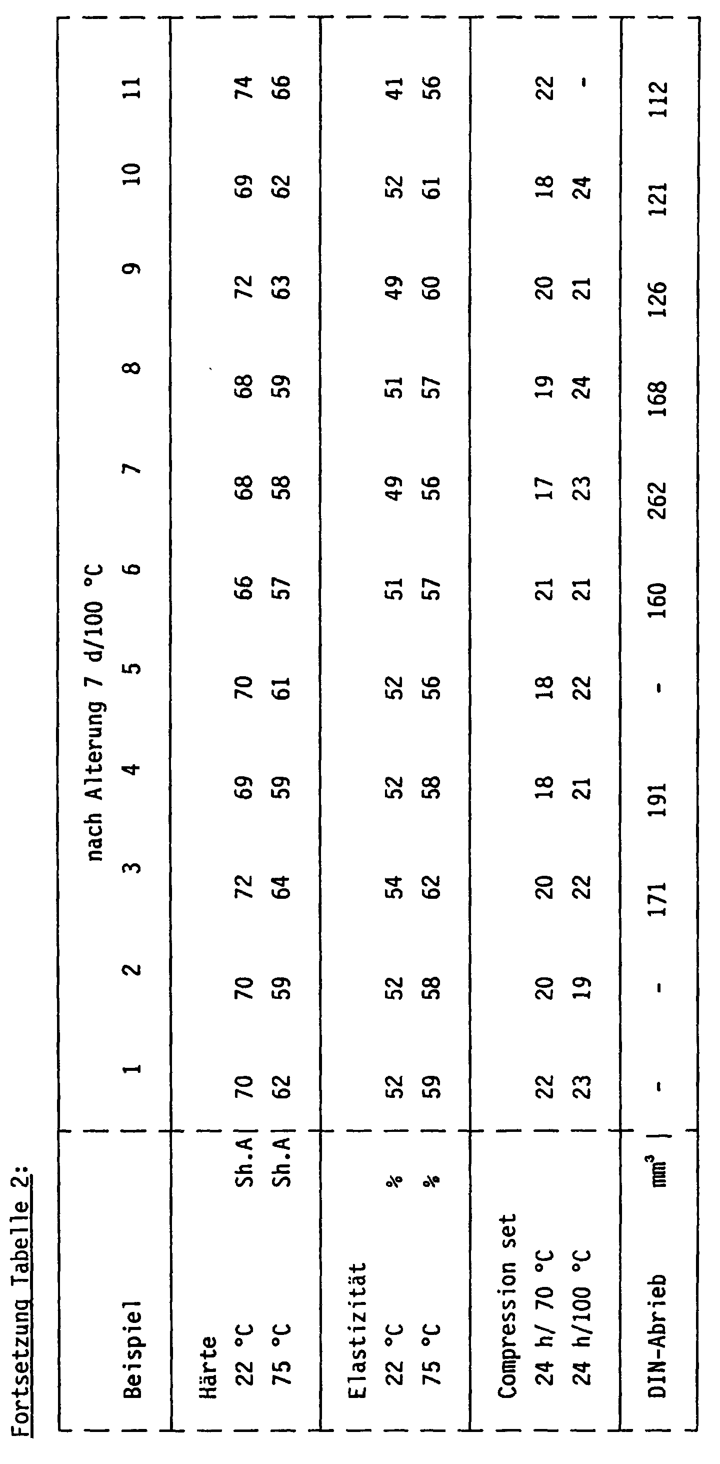

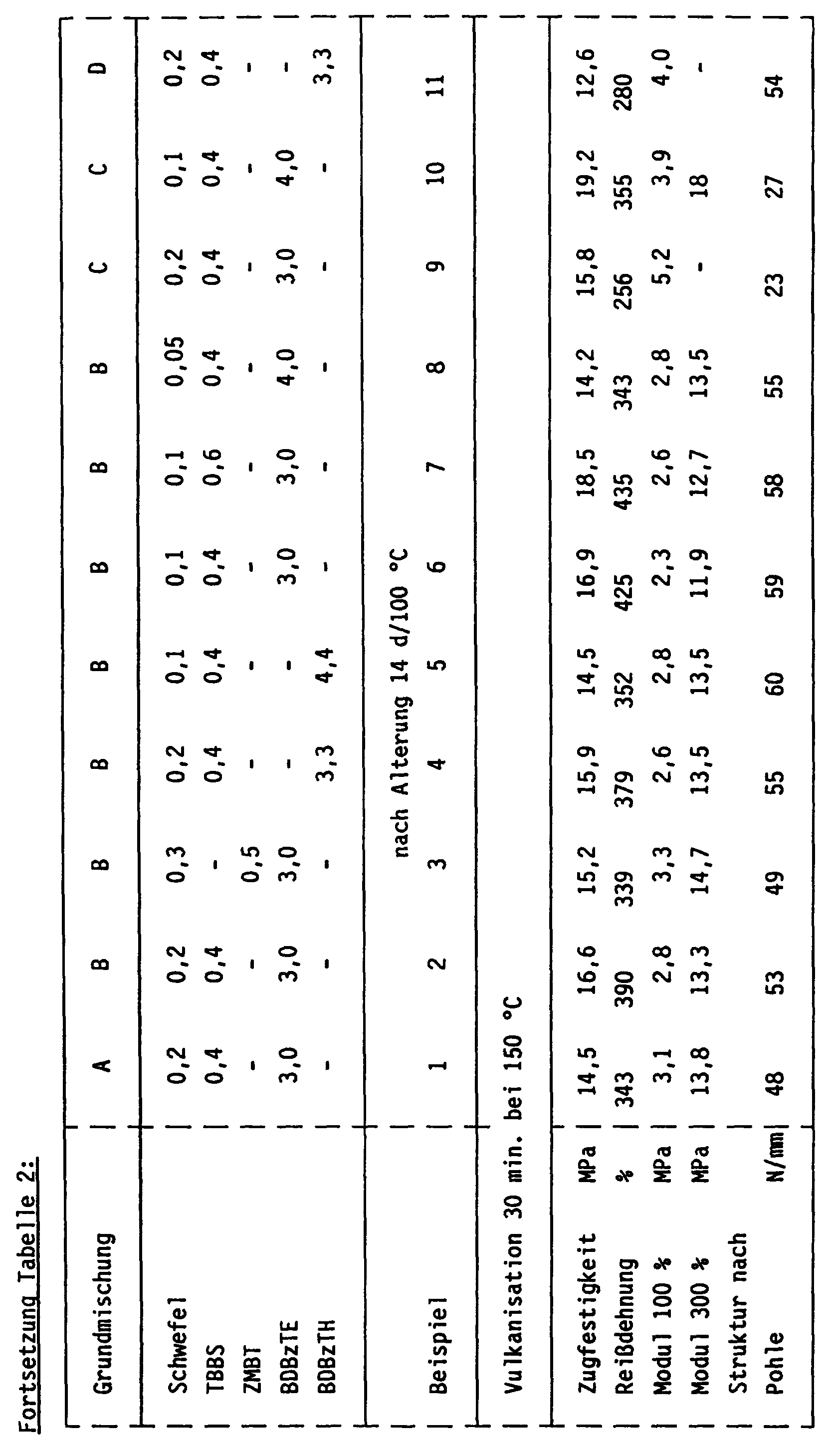

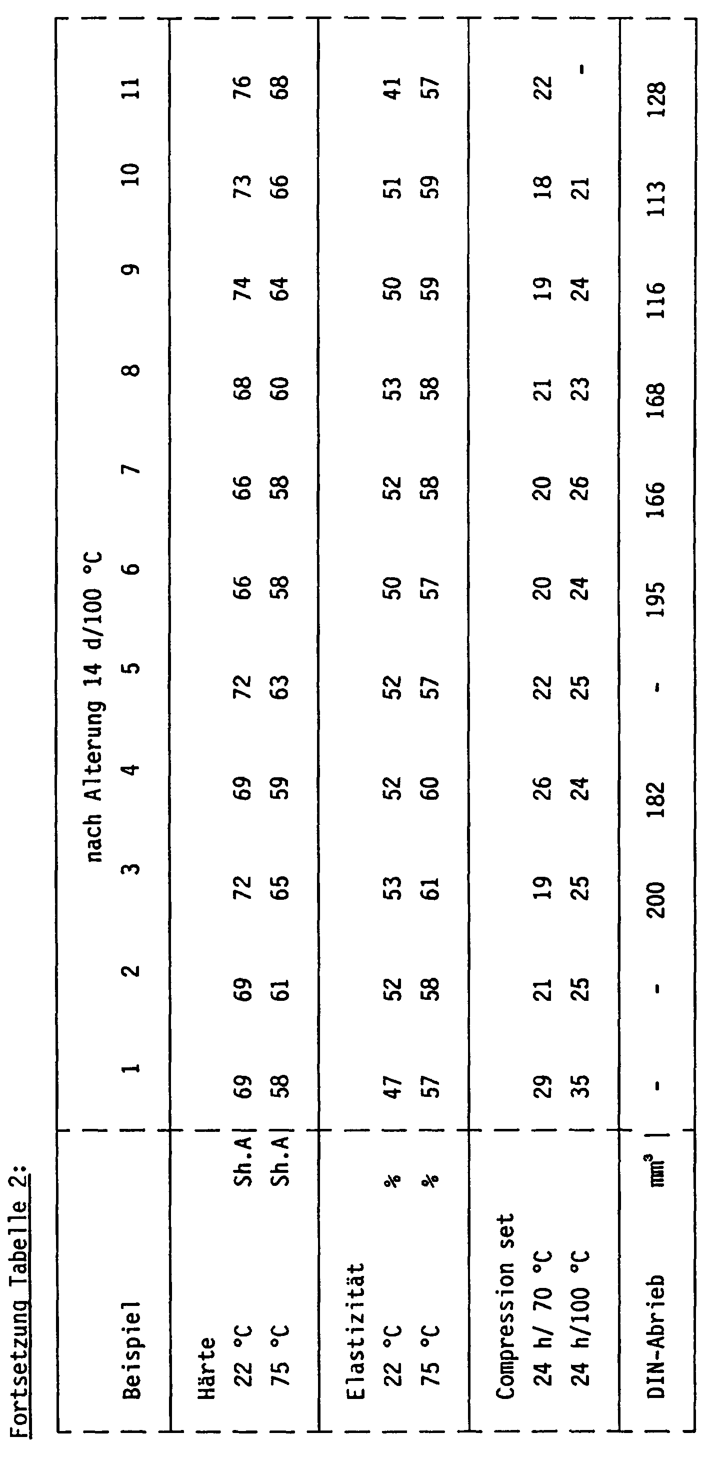

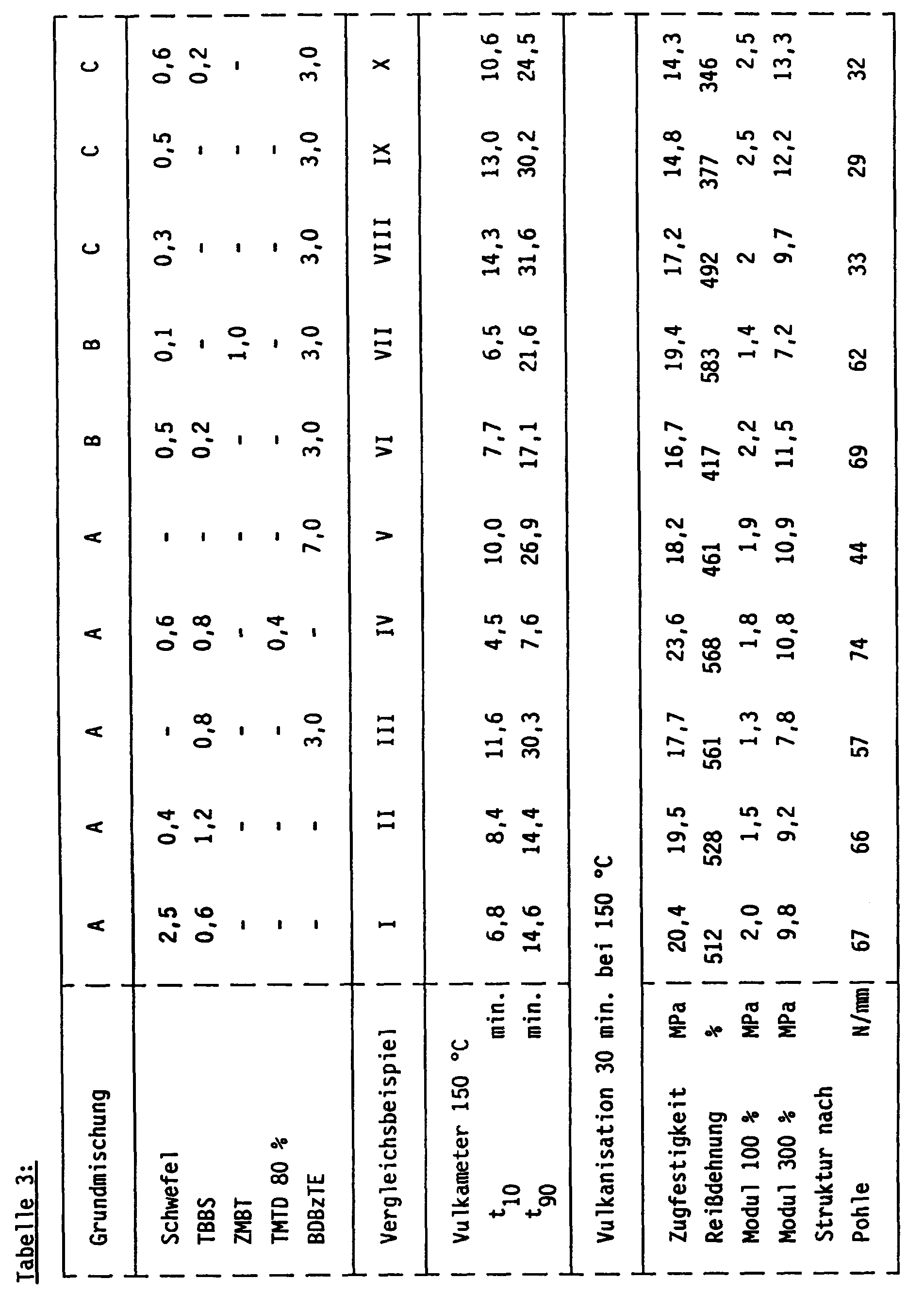

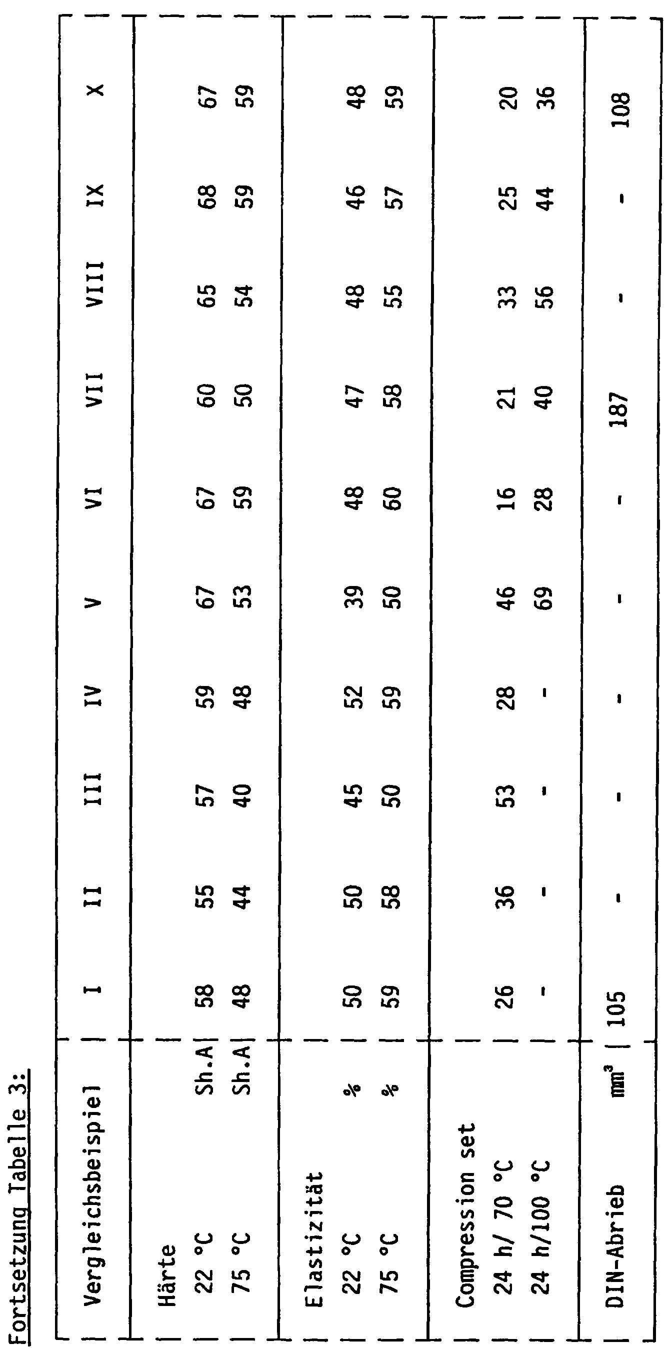

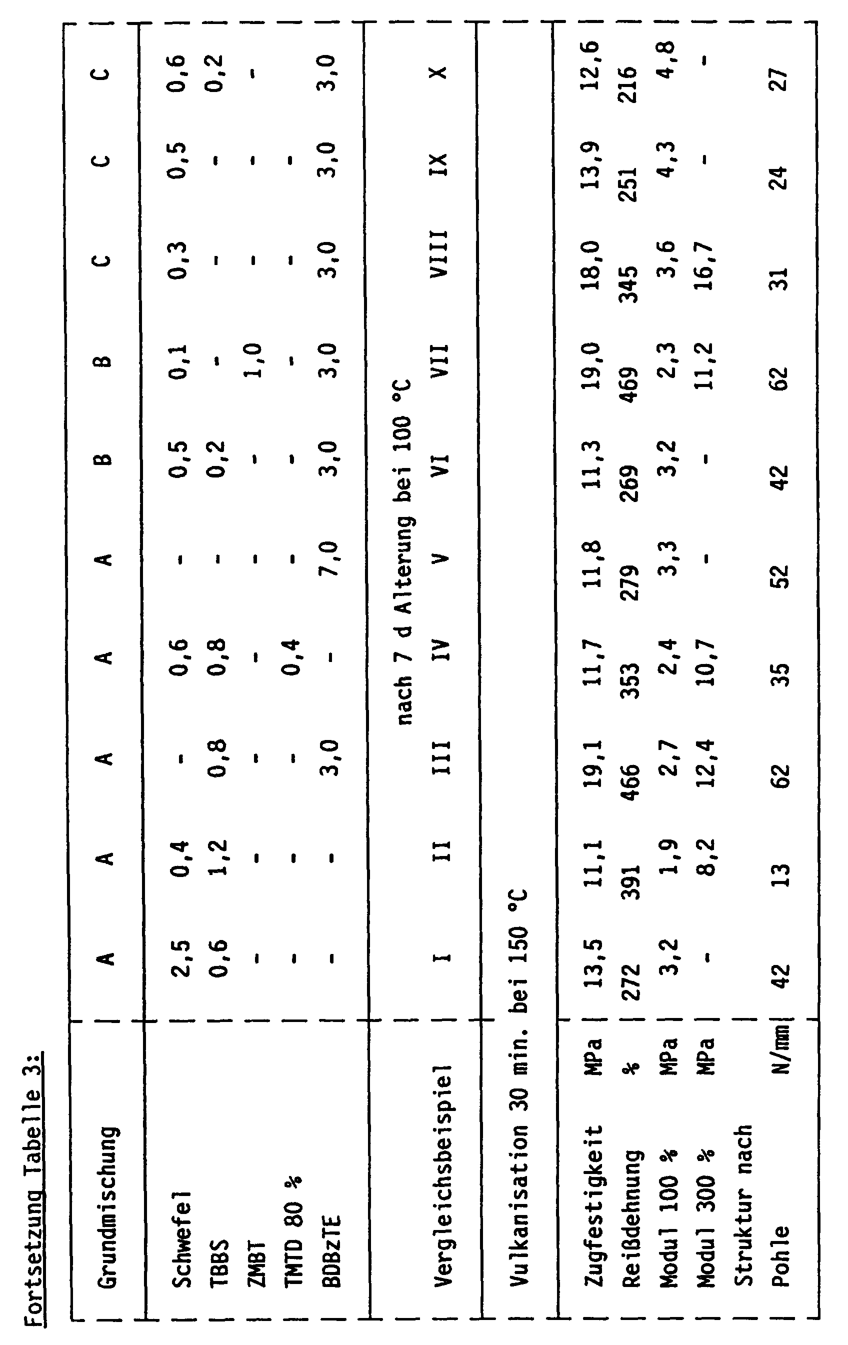

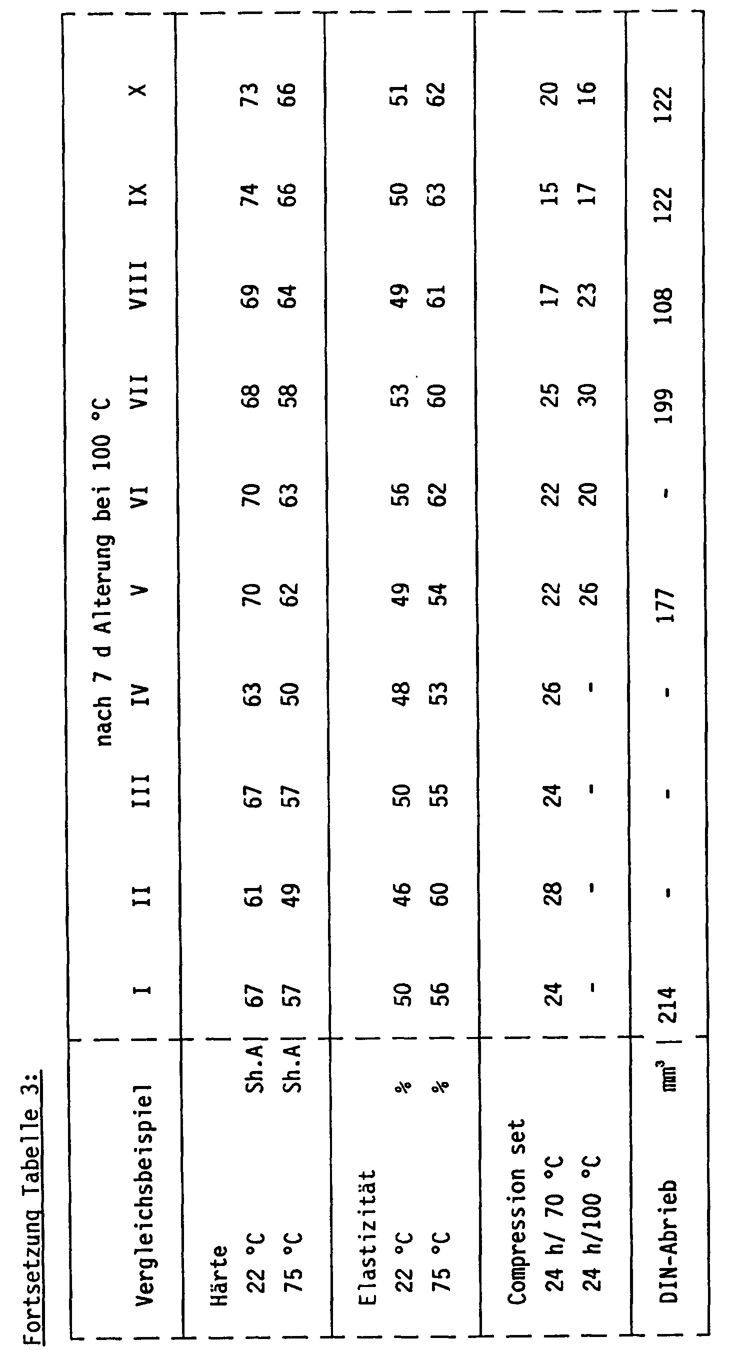

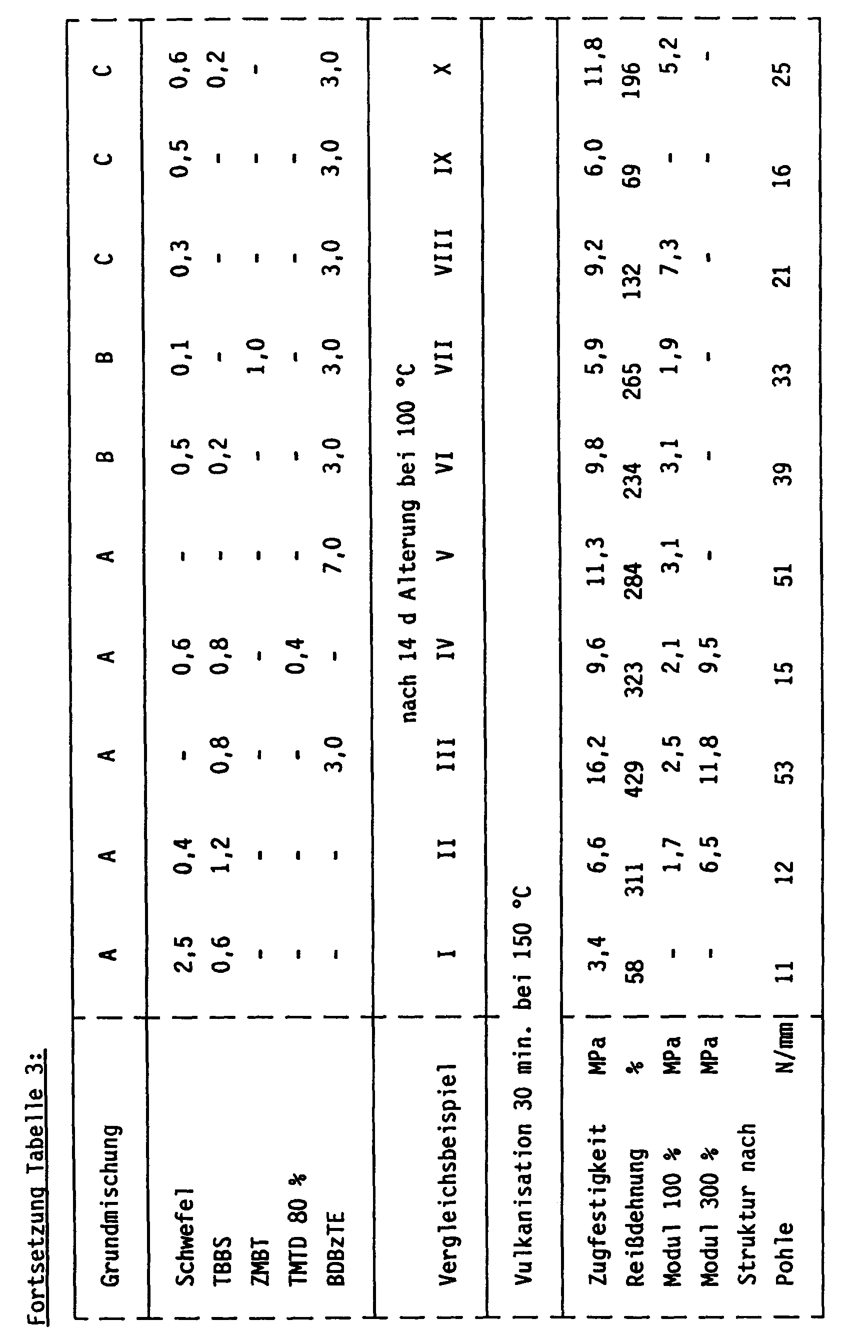

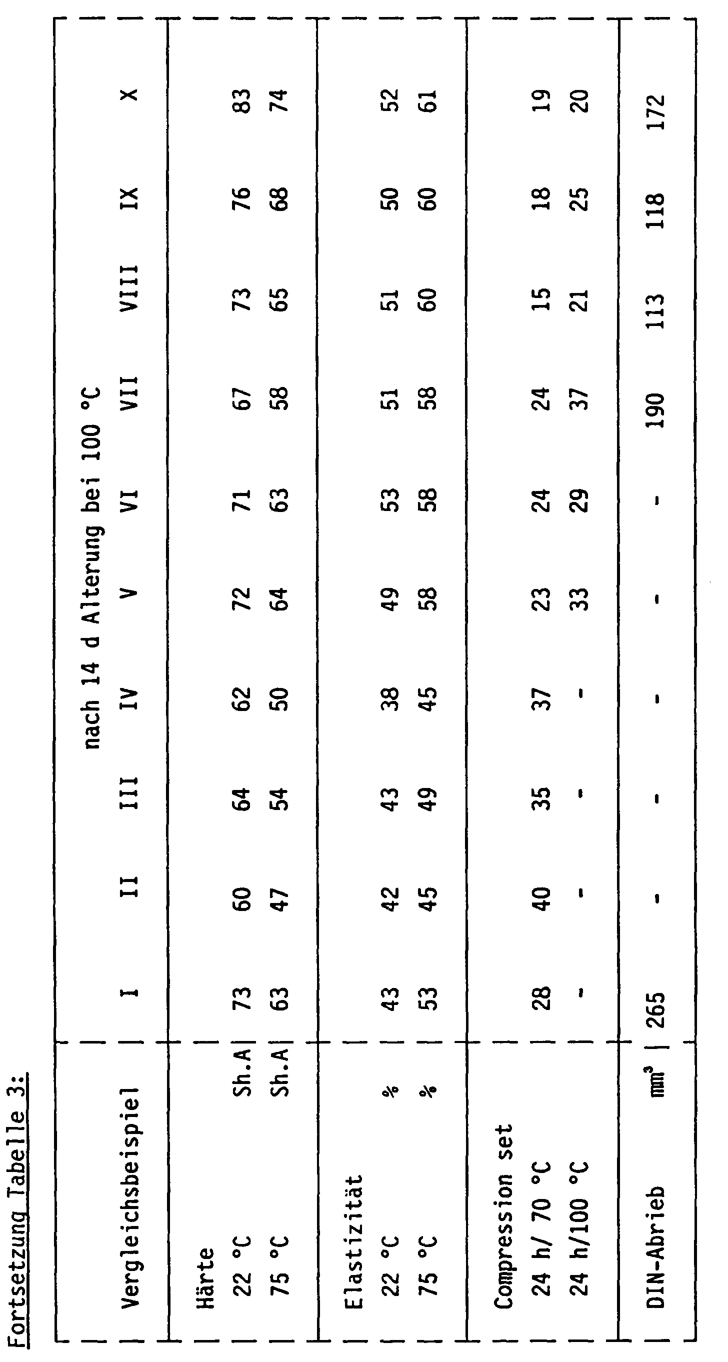

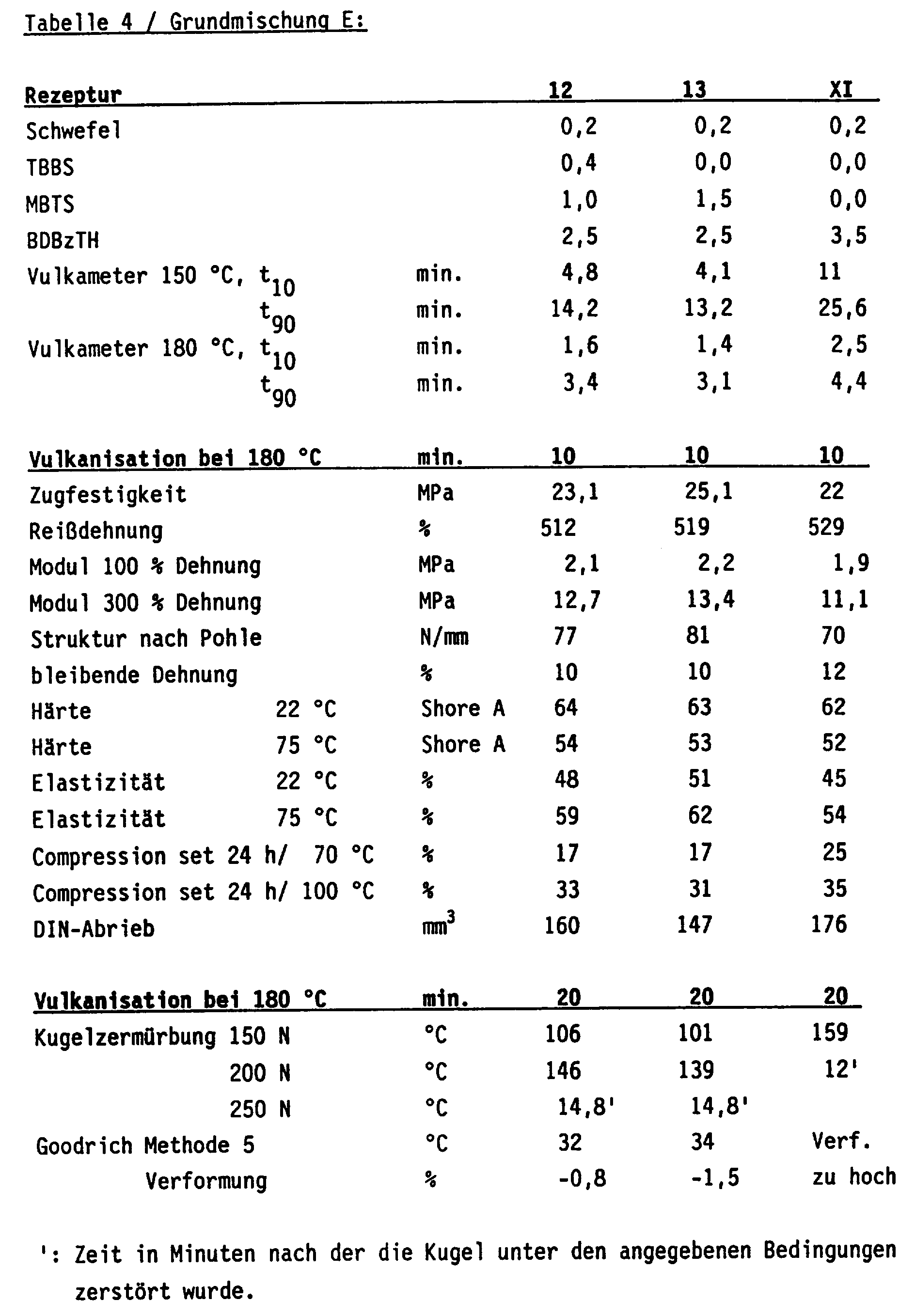

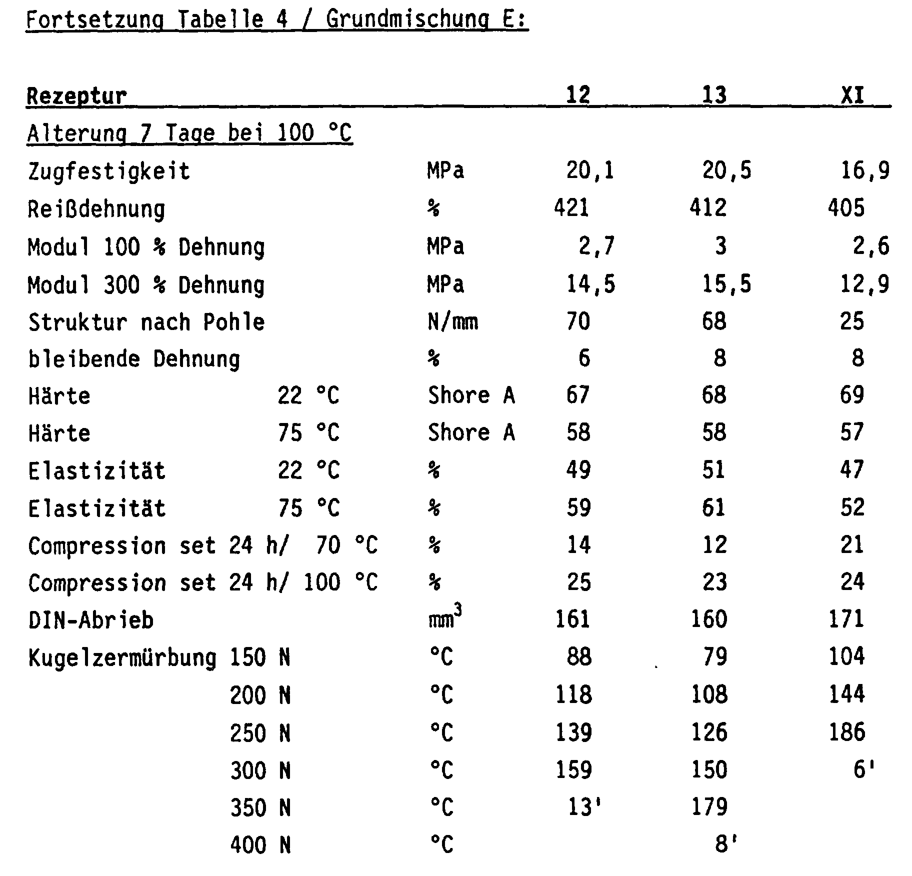

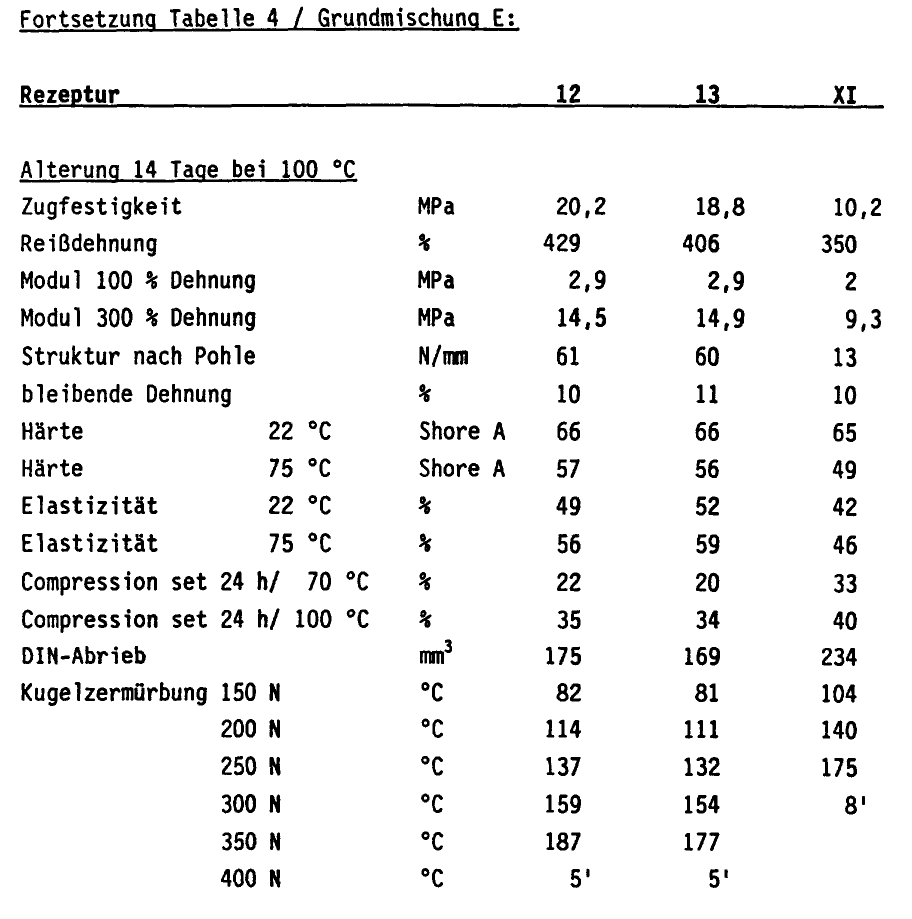

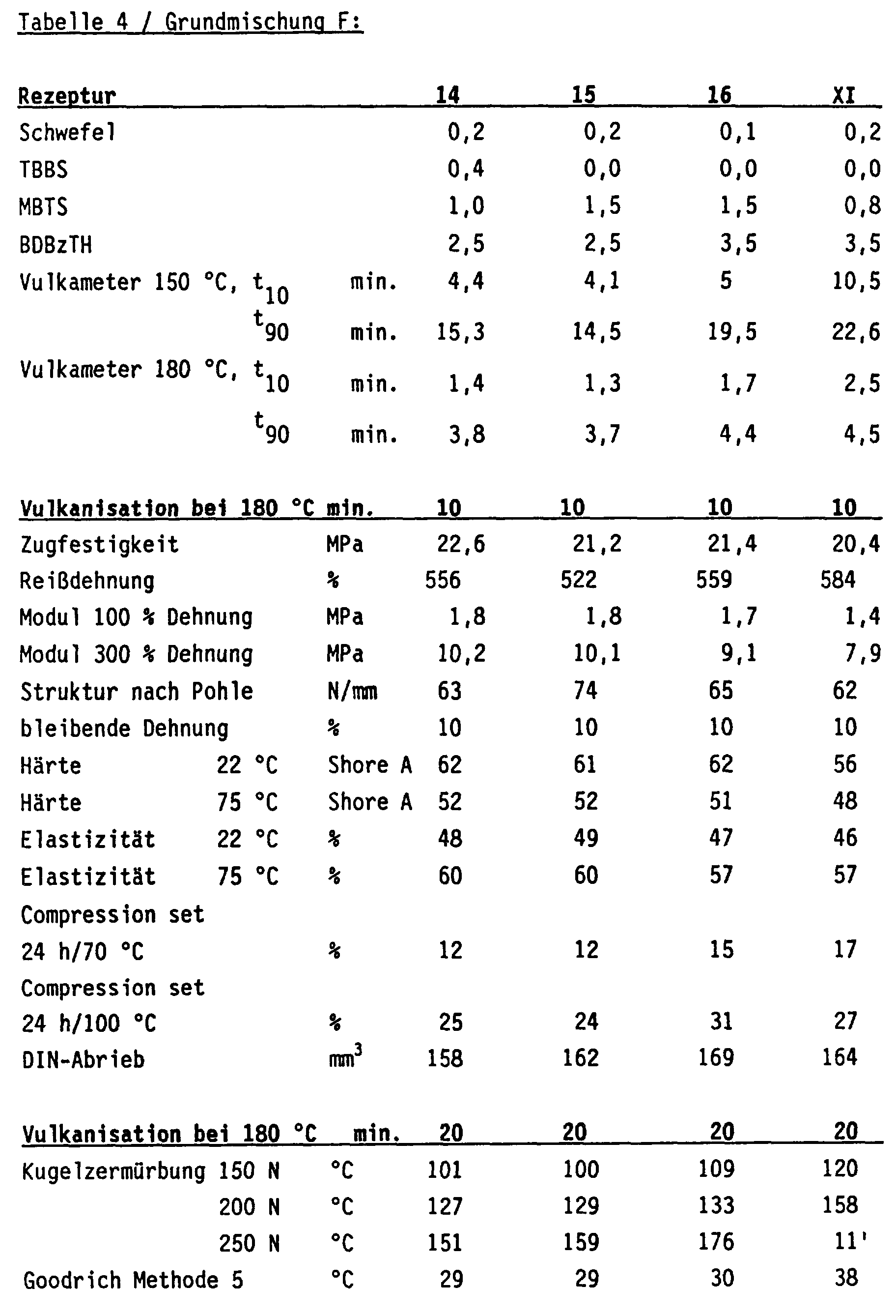

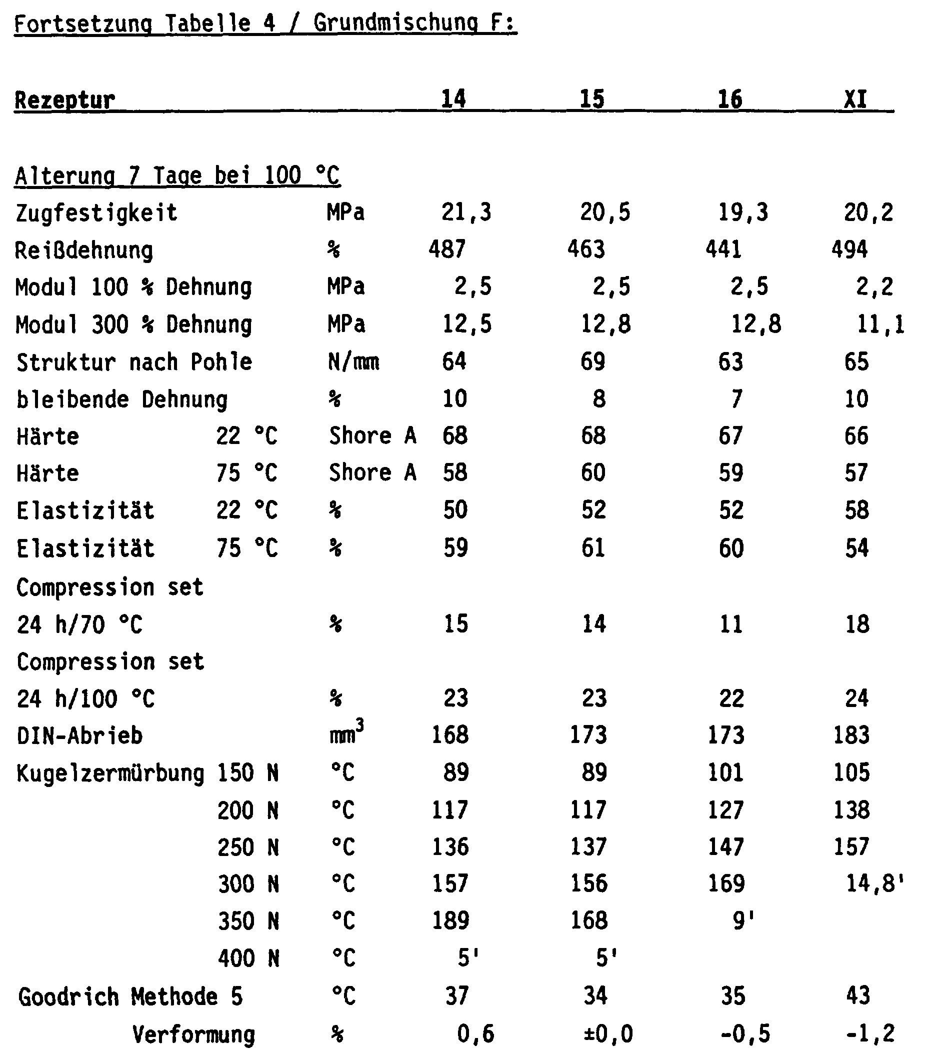

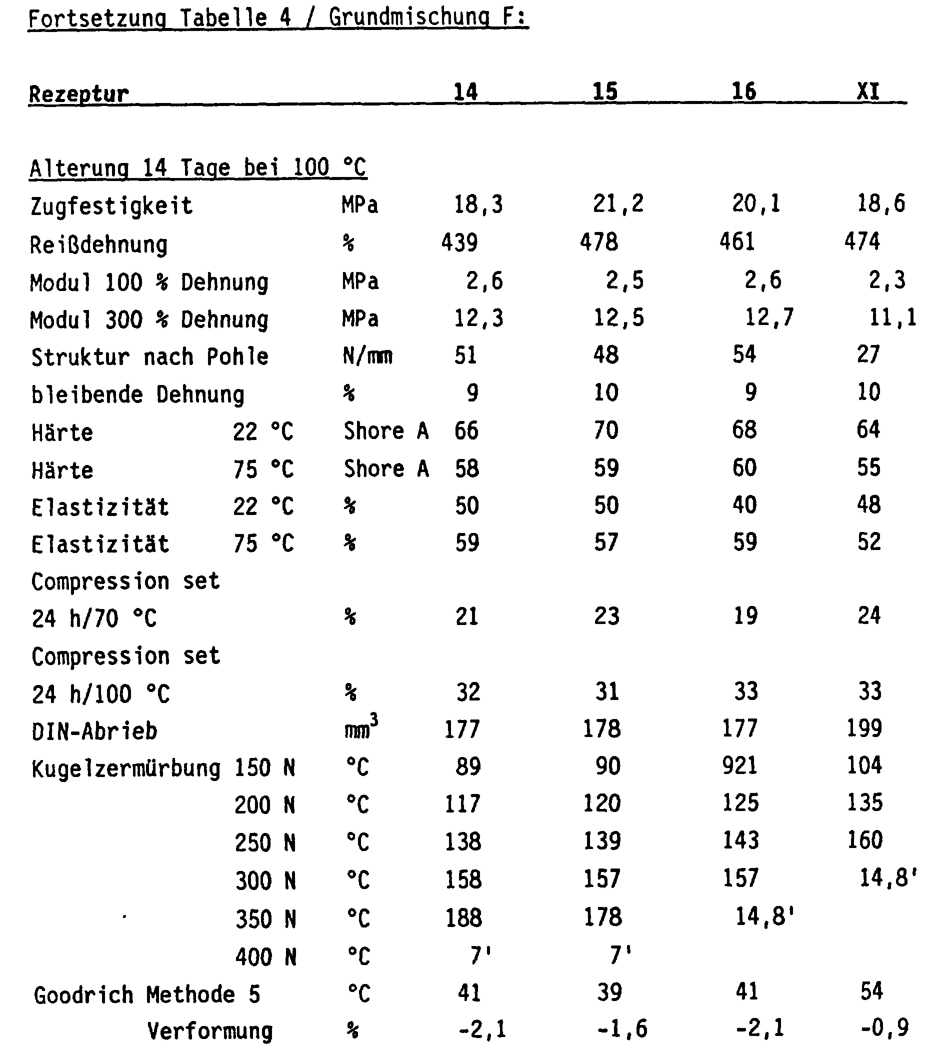

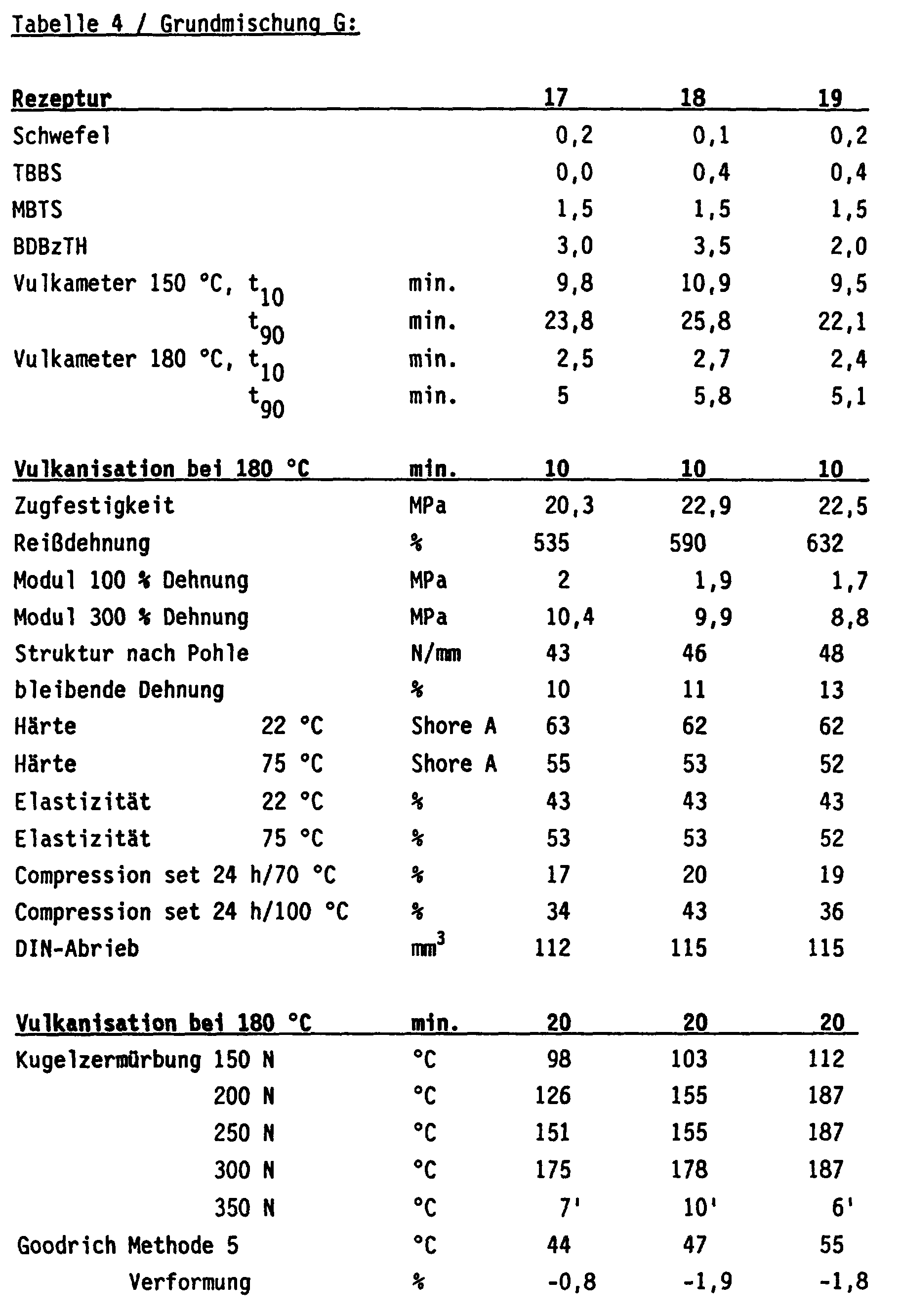

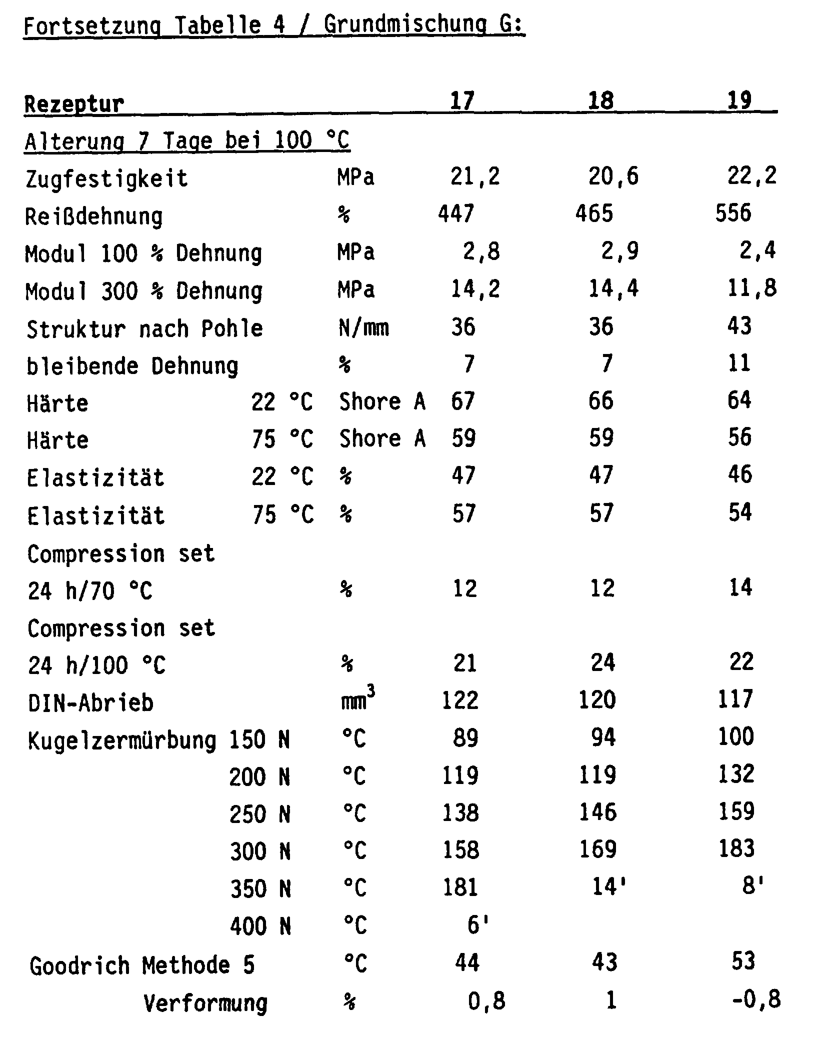

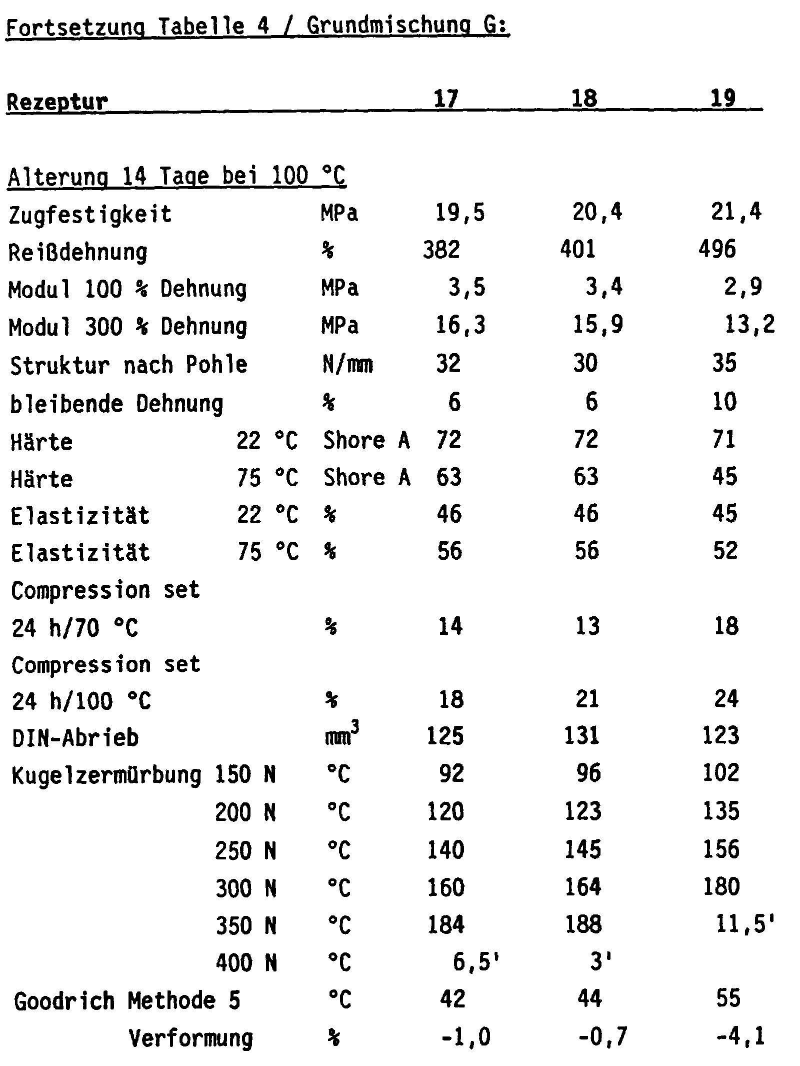

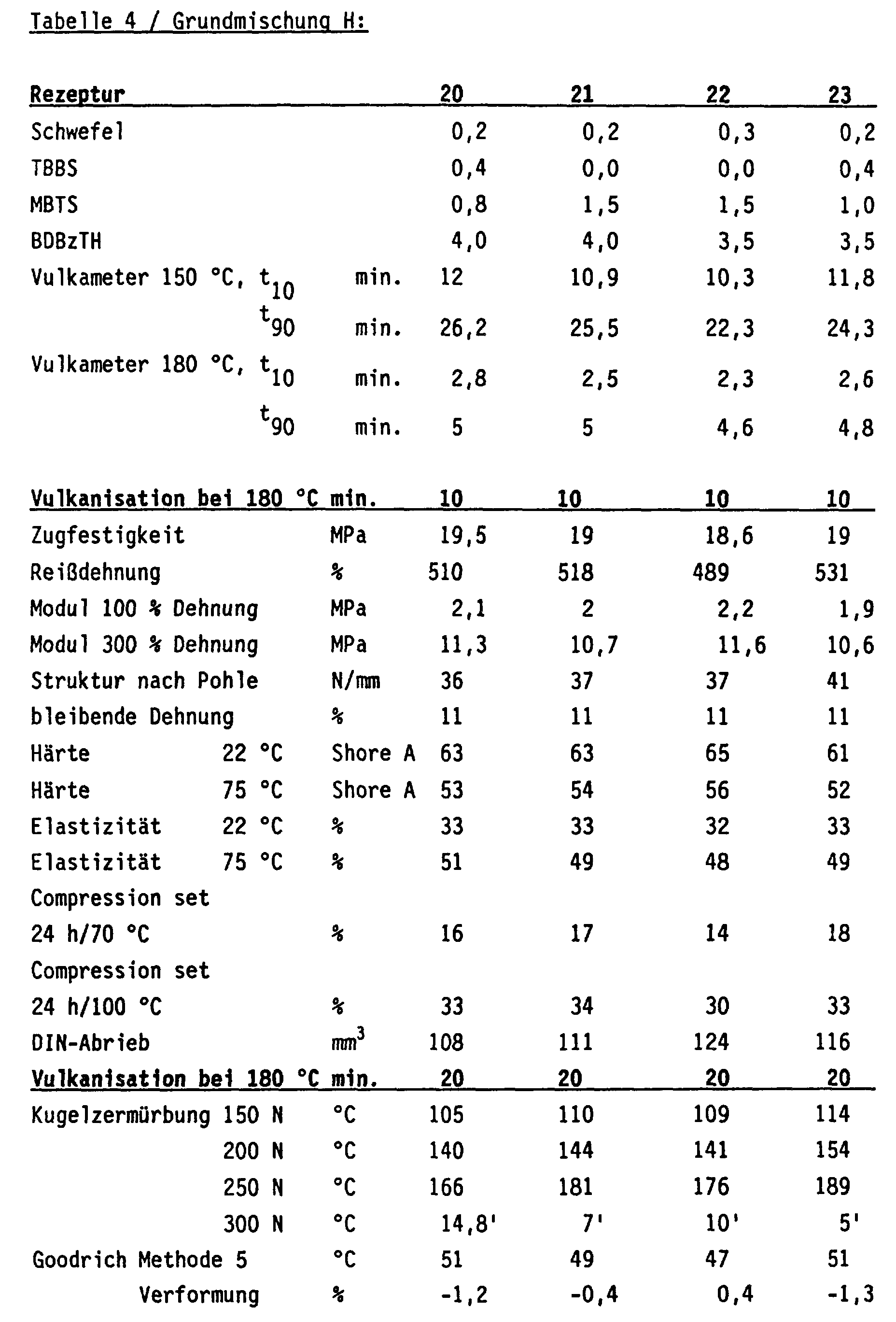

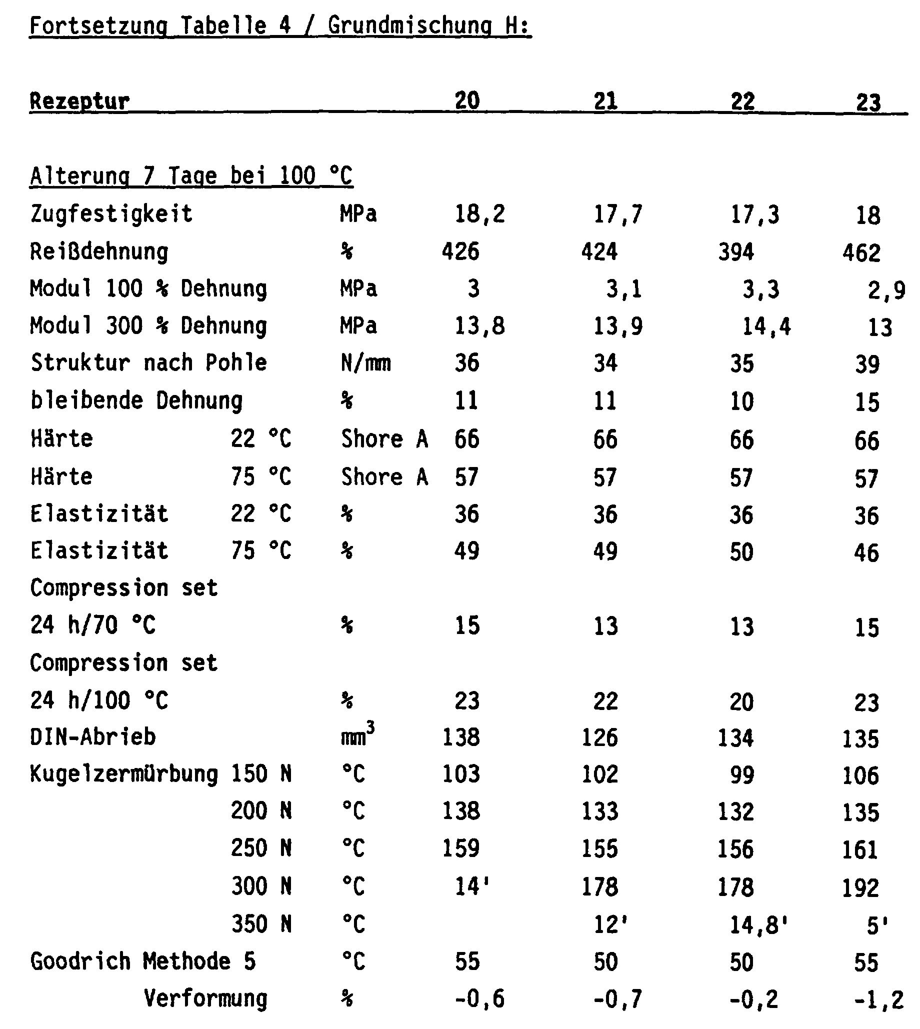

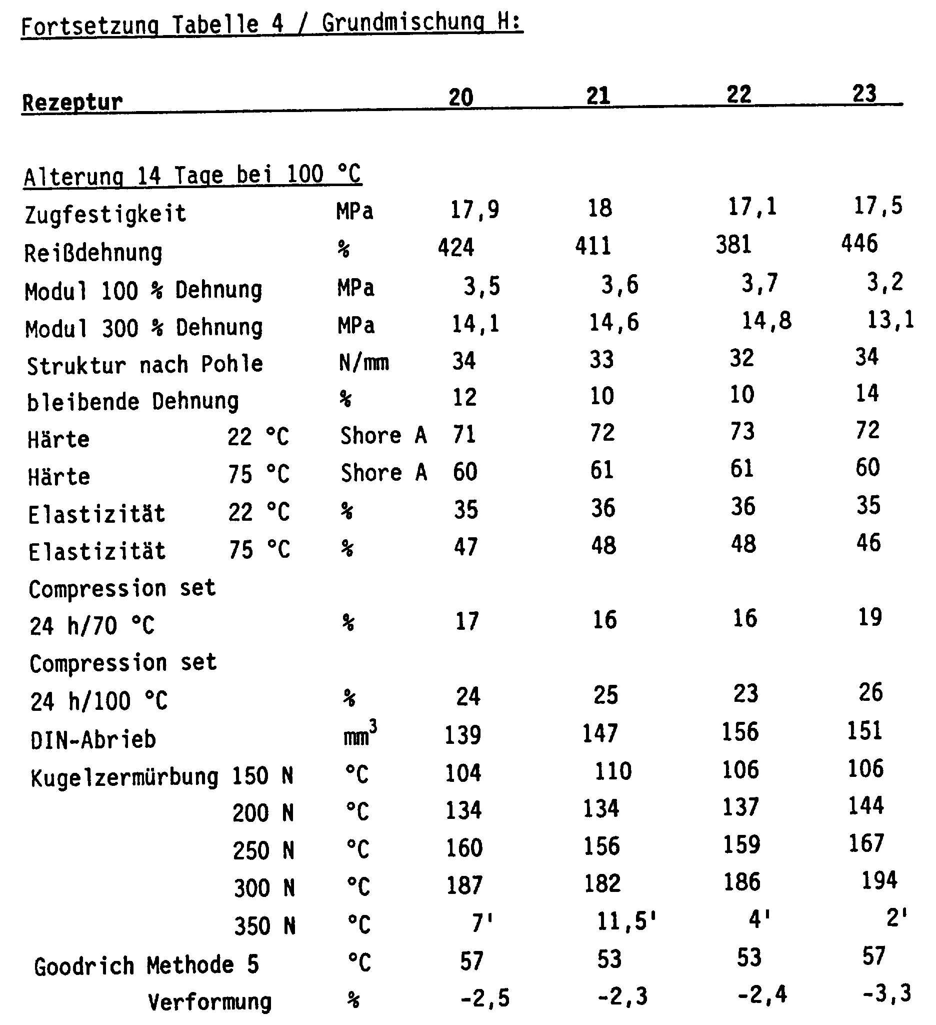

## Patentansprüche

1. Verfahren zur Herstellung von Dienkautschuk-Vulkanisaten mit sehr hoher Alterungsstabilität und Reversionsbeständigkeit,
dadurch gekennzeichnet,
daß die Vulkanisation in Gegenwart von
a) 1 bis 4,5 Teile Vernetzersubstanzen mit der Formel 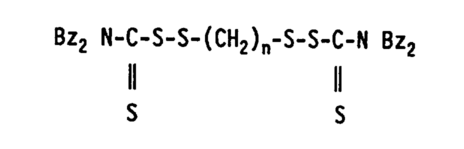 wobei n gleich 2 oder 6 und Bz gleich Benzyl bedeutet, und
b) 0,05 bis 0,3 Teile Schwefel, und
c 1) 1 bis 2,5 Teile Merkaptobschleuniger oder
c 2) 0,2 bis 0,8 Teile Sulfenamidbeschleuniger oder
c 3) 0,3 bis 2,5 Teile Merkaptobeschleuniger und 0,1 bis 0,8 Teile Sulfenamidbeschleuniger,
bezogen auf 100 Teile Dienkautschuk, bei Temperaturen von 140 bis 200 °C durchgeführt wird.

2. Verfahren nach Anspruch 1,
dadurch gekennzeichnet,
daß pro 100 Teile Dienkautschuk
a) 2 bis 4 Teile Vernetzersubstanz, und
b) 0,1 bis 0,2 Teile Schwefel, und
c 1) 1,3 bis 1,8 Teile Merkaptobschleuniger oder
c 2) 0,3 bis 0,5 Teile Sulfenamidbeschleuniger oder
c 3) 0,6 bis 1,5 Teile Merkaptobeschleuniger und 0,2 bis 0,6 Teile Sulfenamidbeschleuniger
verwendet werden.

3. Verfahren nach den Ansprüchen 1 bis 2,
dadurch gekennzeichnet,
daß der Dienkautschuk aus Naturkautschuk, cis-Polyisopren, cis-Polybutadien, Emulsions-SBR, Lösungs-SBR, Vinyl-Polybutadien, Vinyl-SBR, 3,4-Polyisopren, Nitrilkautschuk oder Polyoctenamer sowie aus Mischungen derselben besteht.

4. Verfahren nach Anspruch 3,
dadurch gekennzeichnet,
daß der Dienkautschuk ölverstreckt ist.

5. Verwendung von
a) 1 bis 4,5 Teile Vernetzersubstanzen mit der Formel 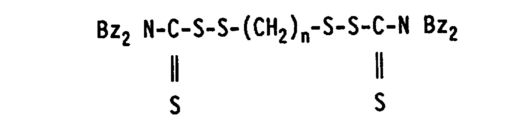 wobei n gleich 2 oder 6 und Bz gleich Benzyl bedeutet, und
b) 0,05 bis 0,3 Teile Schwefel, und
c 1) 1 bis 2,5 Teile Merkaptobschleuniger oder
c 2) 0,2 bis 0,8 Teile Sulfenamidbeschleuniger oder
c 3) 0,3 bis 2,5 Teile Merkaptobeschleuniger und 0,1 bis 0,8 Teile Sulfenamidbeschleuniger,
bezogen auf 100 Teile Dienkautschuk zur Vulkanisation von Dienkautschuken.

## Claims

1. Process for the production of diene rubber vulcanizates having very high ageing stability and reversion resistance, characterized in that the vulcanization is carried out in the presence of
a) 1 to 4.5 parts of crosslinking substances having the formula 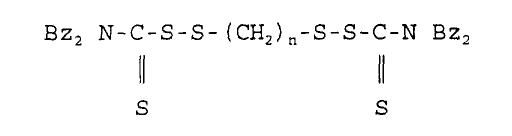 where n is equal to 2 or 6 and Bz is equal to benzyl, and
b) 0.05 to 0.3 parts of sulphur, and
c 1) 1 to 2.5 parts of mercapto accelerator, or
c 2) 0.2 to 0.8 parts of sulphenamide accelerator or
c 3) 0.3 to 2.5 parts of mercapto accelerator and 0.1 to 0.8 parts of sulphenamide accelerator,
based on 100 parts of diene rubber, at temperatures of 140 to 200°C.

2. Process according to Claim 1, characterized in that
a) 2 to 4 parts of crosslinking substance, and
b) 0.1 to 0.2 parts of sulphur, and
c 1) 1.3 to 1.8 parts of mercapto accelerator or
c 2) 0.3 to 0.5 parts of sulphenamide accelerator or
c 3) 0.6 to 1.5 parts of mercapto accelerator and 0.2 to 0.6 parts of sulphenamide accelerator
are used per 100 parts of diene rubber.

3. Process according to Claims 1 to 2, characterized in that the diene rubber is composed of natural rubber, cis-polyisoprene, cis-polybutadiene, emulsion SBR, solution SBR, vinyl-polybutadiene, vinyl-SBR, 3,4-polyisoprene, nitrile rubber or polyoctenamer and also of mixtures of the same.

4. Process according to Claim 3, characterized in that the diene rubber is oil-extended.

5. Use of
a) 1 to 4.5 parts of crosslinking substances having the formula 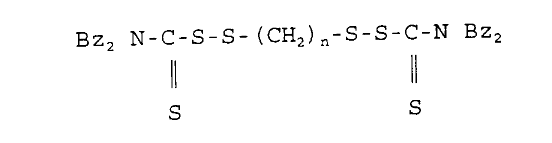 where n is equal to 2 or 6 and Bz is equal to benzyl, and
b) 0.05 to 0.3 parts of sulphur, and
c 1) 1 to 2.5 parts of mercapto accelerator, or
c 2) 0.2 to 0.8 parts of sulphenamide accelerator or
c 3) 0.3 to 2.5 parts of mercapto accelerator and 0.1 to 0.8 parts of sulphenamide accelerator,
based on 100 parts of diene rubber, for the vulcanization of diene rubbers.

## Revendications

1. Procédé de production de produits de vulcanisation de caoutchouc-diène ayant une stabilité très élevée au vieillissement et une stabilité très élevée à la réversion, caractérisé en ce que la vulcanisation est effectuée à des températures de 140 à 200°C en présence de:
a) 1 à 4,5 parties de substances d'agent de réticulation ayant la formule: 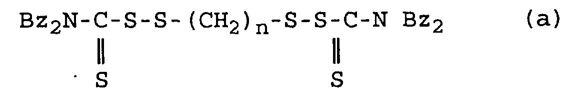 dans laquelle n est égal à 2 ou 6 et Bz signifie Benzyle et,
b) 0,05 à 0,3 parties de soufre et
c 1) 1 à 2,5 parties d'accélérateurs du type mercapto
c 2) 0,2 à 0,8 parties d'accélérateur du type sulfénamide ou,
0,3 à 2,5 parties d'accélérateur du type mercapto et,
0,1 à 0,8 parties d'accélérateur du type sulfénamide, rapporté à 100 parties de caoutchouc-diène.

2. Procédé selon la revendication 1, caractérisé en ce que pour 100 parties de caoutchouc-diène on utilise:
a) 2 à 4 parties de substance d'agent de réticulation
b) 0,1 ) 0,2 parties de soufre et,
c 1) 1,3 à 1,8 parties d'accélérateur du type mercapto,
c 2) 0,3 à 0,5 parties d'accélérateur du type sulfénamide ou,
c 3) 0,6 à 1,5 parties d'accélérateur du type mercapto et, 0,2 à 0,6 parties d'accélérateur du type sulfénamide.

3. Procédé selon les revendications 1 à 2, caractérisé en ce que le caoutchouc-diène consiste en du caoutchouc naturel, du cis-polyisoprène, du cis-polybutadiène, du SBR en émulsion, du vinyle polybutadiène, du vinyle SBR, du 3,4-polyisoprène, du caoutchouc nitrile, ou du polyocténamère ainsi qu'en des mélanges de ceux-ci.

4. Procédé selon la revendication 3, caractérisé en ce que le caoutchouc-diène est étiré à l'huile.

5. Utilisation de:
a) 1 à 4,5 parties de substances d'agent de réticulation de formule: 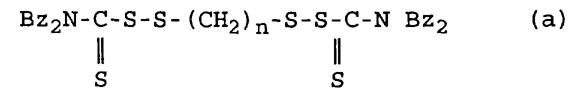 dans laquelle n est égal à 2 ou 6 et Bz signifie Benzyle et,
b) 0,05 à 0,3 parties de soufre et,
c 1) 1 à 2,5 parties d'accélérateur du type mercapto, ou
c 2) 0,2 à 0,8 parties d'accélérateur du type sulfénamide ou,
c 3) 0,3 à 2,5 parties d'accélérateur du type mercapto 0,1 à 0,8 parties d'accélérateur du type sulfénamide
rapporté à 100 parties de caoutchouc-diène en vue de la vulcanisation de caoutchoucs-diène.
